(19)

Europäisches Patentamt

European Patent Office

Office européen des brevets

(11) **EP 4 290 902 A1**

(12) **EUROPEAN PATENT APPLICATION**

(43) Date of publication:
**13.12.2023 Bulletin 2023/50**

(21) Application number: **23177319.3**

(22) Date of filing: **05.06.2023**

(51) International Patent Classification (IPC):
**H04W 12/02** *(2009.01)*       **H04W 12/75** *(2021.01)*
**H04W 84/12** *(2009.01)*

(52) Cooperative Patent Classification (CPC):
**H04W 12/02; H04W 12/75;** H04W 84/12

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.06.2022 US 202263351303 P
30.05.2023 US 202318325213**

(71) Applicant: **Apple Inc.**
**Cupertino, CA 95014 (US)**

(72) Inventors:
• **KNECKT, Jarkko L.**
**Cupertino, California, 95014 (US)**
• **DOMINGUEZ, Charles F.**
**Cupertino, California, 95014 (US)**
• **BORGES, Daniel R.**
**Cupertino, California, 95014 (US)**

• **DASH, Debashis**
**Cupertino, California, 95014 (US)**
• **BRIGGS, Elliot S.**
**Cupertino, California, 95014 (US)**
• **EVRON, Ilan**
**Cupertino, California, 95014 (US)**
• **REUVEN, Nisan**
**Cupertino, California, 95014 (US)**
• **YONG, Su Khiong**
**Cupertino, California, 95014 (US)**
• **WU, Tianyu**
**Cupertino, California, 95014 (US)**
• **ATAR, Udi**
**Cupertino, California, 95014 (US)**
• **LIU, Yong**
**Cupertino, California, 95014 (US)**
• **THAKUR, Sidharth R.**
**Cupertino, California, 95014 (US)**

(74) Representative: **Simmons & Simmons**
**City Point**
**One Ropemaker Street**
**London EC2Y 9SS (GB)**

(54) **ASSOCIATION IDENTIFIER CHANGE AND OBFUSCATION IN WLAN COMMUNICATION**

(57) An electronic device is described. This electronic device may associate with a second electronic device (such as an access point) in a WLAN. While associating or associated with the second electronic device, the electronic device may receive, from the second electronic device, an AID corresponding to the electronic device for use when communicating frames in the WLAN. Moreover, while associated with the second electronic device, the electronic device may obtain a second AID corresponding to the electronic device for use when communicating second frames in the WLAN, where the associating includes replacing the AID with the second AID. Note that obtaining the second AID may include: the electronic device selecting the second AID from a predefined set of AIDs, which were previously received from the second electronic device; or the electronic device receiving, from the second electronic device, the second AID.

**Description**

<u>FIELD</u>

The described embodiments relate, generally, to wireless communications among electronic devices, including communication techniques for association identifier (AID) change and/or obfuscation in wireless communication in wireless local area networks (WLANs).

<u>BACKGROUND</u>

Many electronic devices communicate with each other using wireless local area networks (WLANs), such as those based on a communication protocol that is compatible with an Institute of Electrical and Electronics Engineers (IEEE) standard, such as an IEEE 802.11 standard (which is sometimes referred to as 'Wi-Fi'). However, it can be difficult to secure or enhance the privacy of communication in WLANs.

Notably, an AID value may be used in a trigger frame (which is a type of control frame) provided by an access point to identify one or more the triggered clients or stations (which are henceforth referred to as stations) and the associated reservation units (RUs) to be used by the stations. Moreover, in a downlink multi-user (MU) physical layer convergence protocol (PLCP) protocol data unit (PPDU) or MU PPDU, the AID value may be used in a very high throughput/high efficiency/extremely high throughput (VHT/HE/EHT) preamble to identify the one or more stations that have one or more allocated reservation units. Furthermore, the AID value may be used in a multi-station block acknowledgment (BA) frame to identify the one or more stations that receive the BA frame. Note that the AID value may be assigned by an access point in an association response. Moreover, AID values up to 2007 may be used to identify an associated station. Additionally, the smallest AID values may signal or indicate buffered group frames. In some embodiments, the largest AID values (up to 2047) may be used for special signaling in a trigger frame.

Moreover, in a trigger frame, the AID value may signal the triggered station(s). Alternatively, as in an MU PPDU, the AID value may indicate the receiving station(s) in the VHT/HE/EHT preamble. Furthermore, the AID value(s) may indicate the receiver(s) of a block acknowledgment in a multi-station block acknowledgment. These frames may have strict real time requirements. Consequently, additional delays may have a big impact on the system performance. Note that triggering of MLJ PPDU preamble encryption may not be possible because of the frame structure and operation delay. Additionally, legacy (e.g., compatible with one or more previous IEEE 802.11 standards) and IEEE 802.11bi stations may need to be able to use the same trigger frames and VHT/HE/EHT MU PPDU preamble. Therefore, the AID field and frames may need to be backward compatible. Additionally, it is expected that future WLANs will transmit the AID field more often. For example, the (multi-user and high-efficiency trigger-based) PPDUs introduced in IEEE 802.1 1be (which is sometimes referred to as 'Wi-Fi 7') include AID values, and triggered access and multi-user transmissions are based at least in part on the AID.

In general, 11 bits are typically used to specify or indicate the AID in frames, such as a MU PPDU or multi-station block acknowledgment. The exception is in a trigger frame, which allocates 12 bits to the AID subfield, although only 11 of these bits specify or indicate the AID value. Consequently, there may be 10 bits that need to be changed and/or obfuscated.

<u>SUMMARY</u>

In a first group of embodiments, an electronic device that obtains a second AID is described. This electronic device includes: an antenna node that can communicatively couple to an antenna; and interface circuitry that can communicatively couple to the antenna node. During operation, the interface circuit associates with a second electronic device in a WLAN, where, while associating or associated with the second electronic device, the interface circuitry receives, from the second electronic device, an AID corresponding to the electronic device for use when communicating frames in the WLAN. Moreover, while associated with the second electronic device, the interface circuitry obtains the second AID corresponding to the electronic device for use when communicating second frames in the WLAN,

In some embodiments, the associating may include replacing the AID with the second AID and where obtaining the second AID includes: selecting the second AID from a predefined set of AIDs; receiving, from the second electronic device, the second AID; generating the second AID using a predetermined or predefined technique (such as a formula or an equation); or receiving, from a third electronic device, the second AID.

Note that the second electronic device may include an access point.

Moreover, the second AID may be obtained a predetermined or predefined time interval following the receiving of the AID. More generally, the second AID is obtained after the AID is received.

Furthermore, while associating with the second electronic device, the predefined set of AIDs may be received from the second electronic device.

Additionally, the interface circuitry may obfuscate a current AID used by the electronic device when communicating the frames or the second frames. Note that the current AID may include the AID or the second AID. For example, the obfuscation may be performed by adding a value associated with the second electronic device to the current AID. In some embodiments, the value may be changed in accordance with a second time interval. Notably, the second time interval may include a beacon interval of the second electronic device.

Alternatively or additionally, the frames or the second frames may indicate that the current AID is obfuscated.

Moreover, the electronic device may include a non-access point multi-link device (MLD) and the current AID is used for multiple links in the WLAN. In some embodiments, the obfuscating may be MLD-specific.

Furthermore, the current AID may be used for only one link in the WLAN. In some embodiments, the obfuscating may be link-specific.

Other embodiments provide the second electronic device that performs counterpart operations corresponding to at least some of the aforementioned operations performed by the electronic device.

Other embodiments provide an integrated circuit (which is sometimes referred to as a 'communication circuit') for use with the electronic device or the second electronic device. The integrated circuit may perform at least some of the aforementioned operations or counterpart operations corresponding to at least some of the aforementioned operations.

Other embodiments provide a computer-readable storage medium for use with the electronic device or the second electronic device. When program instructions stored in the computer-readable storage medium are executed by the electronic device or the second electronic device, the program instructions may cause the electronic device or the second electronic device to perform at least some of the aforementioned operations performed by the electronic device or counterpart operations performed by the second electronic device.

Other embodiments provide a method for obtaining or providing the second AID. The method includes at least some of the aforementioned operations performed by the electronic device or counterpart operations performed by the second electronic device.

In a second group of embodiments, an electronic device that provides a second AID is described. This electronic device includes: an antenna node that can communicatively couple to an antenna; and interface circuitry that can communicatively couple to the antenna node. During operation, the interface circuitry associates with a second electronic device in a WLAN, where, while associating with the second electronic device, the interface circuitry provides, addressed to the second electronic device, an AID corresponding to the second electronic device for use when communicating frames in the WLAN. Moreover, while associated with the second electronic device, the interface circuitry provides, addressed to the second electronic device, a second AID corresponding to the second electronic device for use when communicating second frames in the WLAN, where the associating includes replacing the AID with the second AID.

Note that the electronic device may include an access point.

Moreover, the second AID may be provided a predetermined or predefined time interval following the providing of the AID. More generally, the second AID is provided after the AID is provided.

Moreover, providing the AID may include providing a predefined set of AIDs. Note that adjacent AIDs in the predefined set of AIDs may be unique relative to corresponding AIDs in another predefined set of AIDs provided by the electronic device to a third electronic device that is associated with the electronic device.

Furthermore, the interface circuitry may provide, for the second electronic device, information indicating a value used in obfuscating the AID or the second AID when used to communicate the frames or the second frames, respectively.

Additionally, the second electronic device may include a non-access point MLD and the current AID may be used for multiple links in the WLAN.

In some embodiments, the obfuscating is MLD-specific.

Moreover, the current AID may be used for only one link in the WLAN. In some embodiments, the obfuscating may be link-specific.

Other embodiments provide the second electronic device that performs counterpart operations corresponding to at least some of the aforementioned operations performed by the electronic device.

Other embodiments provide an integrated circuit (which is sometimes referred to as a 'communication circuit') for use with the electronic device or the second electronic device. The integrated circuit may perform at least some of the aforementioned operations or counterpart operations corresponding to at least some of the aforementioned operations.

Other embodiments provide a computer-readable storage medium for use with the electronic device or the second electronic device. When program instructions stored in the computer-readable storage medium are executed by the electronic device or the second electronic device, the program instructions may cause the electronic device or the second electronic device to perform at least some of the aforementioned operations performed by the electronic device or counterpart operations performed by the second electronic device.

Other embodiments provide a method for obtaining or providing the second AID. The method includes at least some of the aforementioned operations performed by the electronic device or counterpart operations performed by the second electronic device.

In a third group of embodiments, an electronic device that transmits a frame is described. This electronic device includes: an antenna node that can communicatively couple to an antenna; and interface circuitry that can communicatively couple to the antenna node. During operation, the interface circuitry transmits, addressed to a second electronic device in a WLAN, the frame without a media access control (MAC) address of the electronic device.

Note that the second electronic device may include an access point.

Moreover, the interface circuitry may provide, addressed to the second electronic device, an association request that indicates the electronic device supports communication of frames without the MAC address of the electronic device.

Furthermore, the interface circuitry may receive, associated with the second electronic device, an association response that indicates the second electronic device supports communication of the frames without the MAC address of the electronic device.

Additionally, the frame may include a data frame in response to a trigger frame associated with the second electronic device.

In some embodiments, the frame may include: a quality-of-service (QoS) data frame, a QoS null frame, a management frame, or a block acknowledgment.

Note that the frame may include an AID corresponding to the electronic device. This AID may be obfuscated.

Other embodiments provide the second electronic device that performs counterpart operations corresponding to at least some of the aforementioned operations performed by the electronic device.

Other embodiments provide an integrated circuit (which is sometimes referred to as a 'communication circuit') for use with the electronic device or the second electronic device. The integrated circuit may perform at least some of the aforementioned operations or counterpart operations corresponding to at least some of the aforementioned operations.

Other embodiments provide a computer-readable storage medium for use with the electronic device or the second electronic device. When program instructions stored in the computer-readable storage medium are executed by the electronic device or the second electronic device, the program instructions may cause the electronic device or the second electronic device to perform at least some of the aforementioned operations performed by the electronic device or counterpart operations performed by the second electronic device.

Other embodiments provide a method for transmitting or receiving the frame. The method includes at least some of the aforementioned operations performed by the electronic device or counterpart operations performed by the second electronic device.

In a fourth group of embodiments, an electronic device that transmits a frame is described. This electronic device includes: an antenna node that can communicatively couple to an antenna; and interface circuitry that can communicatively couple to the antenna node. During operation, the interface circuitry transmits, addressed to a second electronic device in a WLAN, a frame without a MAC address of the second electronic device.

Note that the electronic device may include an access point.

Moreover, the interface circuitry may receive, associated with the second electronic device, an association request that indicates the second electronic device supports communication of frames without the MAC address of the second electronic device.

Furthermore, the interface circuitry may provide, addressed to the second electronic device, an association response that indicates the electronic device supports communication of the frames without the MAC address of the second electronic device.

Additionally, the frame may include a trigger frame. In some embodiments, the trigger frame may include: a buffer status report (BSR) poll frame, or a multi-user block acknowledgment request (BAR) frame.

Other embodiments provide the second electronic device that performs counterpart operations corresponding to at least some of the aforementioned operations performed by the electronic device.

Other embodiments provide an integrated circuit (which is sometimes referred to as a 'communication circuit') for use with the electronic device or the second electronic device. The integrated circuit may perform at least some of the aforementioned operations or counterpart operations corresponding to at least some of the aforementioned operations.

Other embodiments provide a computer-readable storage medium for use with the electronic device or the second electronic device. When program instructions stored in the computer-readable storage medium are executed by the electronic device or the second electronic device, the program instructions may cause the electronic device or the second electronic device to perform at least some of the aforementioned operations performed by the electronic device or counterpart operations performed by the second electronic device.

Other embodiments provide a method for transmitting or receiving the frame. The method includes at least some of the aforementioned operations performed by the electronic device or counterpart operations performed by the second electronic device.

This Summary is provided for purposes of illustrating some exemplary embodiments, so as to provide a basic understanding of some aspects of the subject matter described herein. Accordingly, it will be appreciated that the above-described features are only examples and should not be construed to narrow the scope or spirit of the subject matter described herein in any way. Other features, aspects, and advantages of the subject matter described herein will become apparent from the following Detailed Description, Figures, and Claims.

**BRIEF DESCRIPTION OF THE DRAWINGS**

The included drawings are for illustrative purposes and serve only to provide examples of possible structures and arrangements for the disclosed systems and techniques for intelligently and efficiently managing communication between multiple associated user devices. These drawings in no way limit any changes in form and detail that may be made to the embodiments by one skilled in the art without departing from the spirit and scope of the embodiments. The embodiments will be readily understood by the following detailed description in conjunction with the accompanying drawings, where like reference numerals designate like structural elements.

FIG. 1 is a block diagram illustrating an example of communication between electronic devices.

FIG. 2 is a block diagram illustrating an example of communication between electronic devices.

FIG. 3 is a flow diagram illustrating an example method for obtaining a second association identifier (AID) using an electronic device of FIG. 1 or 2.

FIG. 4 is a flow diagram illustrating an example method for providing a second AID using an electronic device of FIG. 1 or 2.

FIG. 5 is a drawing illustrating an example of communication between the electronic devices of FIG. 1 or 2.

FIG. 6 is a flow diagram illustrating an example method for transmitting a frame using an electronic device of FIG. 1 or 2.

FIG. 7 is a flow diagram illustrating an example method for transmitting a frame using an electronic device of FIG. 1 or 2.

FIG. 8 is a drawing illustrating an example of communication between the electronic devices of FIG. 1 or 2.

FIG. 9 is a flow diagram illustrating an example method of privacy enhancement using an electronic device of FIG. 1 or 2.

FIG. 10 is a drawing illustrating an example of AID obfuscation using an electronic device of FIG. 1 or 2.

FIG. 11 is a drawing illustrating an example of communication between the electronic devices of FIG. 1 or 2.

FIG. 12A is a drawing of an example of a data frame in an infrastructure mode for use during communication between electronic devices of FIG. 1 or 2.

FIG. 12B is a drawing of an example of a privacy-enhanced data frame for use during communication between electronic devices of FIG. 1 or 2.

FIG. 13 is a drawing of an example of a management-frame format for use during communication between electronic devices of FIG. 1 or 2.

FIG. 14 is a drawing of an example of a frame-control-field format in a S1G PPDU when a type subfield is equal to '0' or '2' for use during communication between electronic devices of FIG. 1 or 2.

FIG. 15 is a flow diagram of a method for operating a station when a trigger frame is received by one of the electronic devices of FIG. 1 or 2.

FIG. 16 is a drawing of an example of a multi-station block acknowledgment frame format during communication between electronic devices of FIG. 1 or 2.

FIG. 17 is a drawing illustrating an example of communication between the electronic devices of FIG. 1 or 2.

FIG. 18 is a block diagram illustrating an example of an electronic device of FIG. 1 or 2.

Note that like reference numerals refer to corresponding parts throughout the drawings. Moreover, multiple instances of the same part are designated by a common prefix separated from an instance number by a dash.

## DETAILED DESCRIPTION

In a first group of embodiments, an electronic device that obtains an AID (which is sometimes referred to as an 'AID value') is described. This electronic device may associate with a second electronic device (such as an access point) in a WLAN. While associating or associated with the second electronic device, the electronic device may receive, from the second electronic device, the AID corresponding to the electronic device for use when communicating frames in the WLAN. Moreover, while associated with the second electronic device, the electronic device may obtain a second AID corresponding to the electronic device for use when communicating second frames in the WLAN, where the associating includes replacing the AID with the second AID. Note that obtaining the second AID may include: selecting the second AID from a predefined set of AIDs; receiving, from the second electronic device, the second AID; generating the second AID using a predetermined or predefined technique (such as a formula or an equation); or receiving, from a third electronic device, the second AID.

In a second group of embodiments, a second electronic device that provides an AID is described. The second electronic device (such as an access point) may associate with an electronic device in a WLAN. While associating or associated with the electronic device, the second electronic device may provide, addressed to the electronic device, the AID corresponding to the electronic device for use when communicating frames in the WLAN. Moreover, while associated with the electronic device, the second electronic device may provide, addressed to the electronic device, a second AID corresponding to the electronic device for use when communicating second frames in the WLAN, where the associating includes replacing the AID with the second AID.

In a third group of embodiments, an electronic device that transmits a frame is described. During operation, the electronic device may transmit, addressed to a second electronic device in a WLAN, the frame without a MAC address of the electronic device.

In a fourth group of embodiments, an electronic device that transmits a frame is described. During operation, the electronic device may transmit, addressed to a second electronic device in a WLAN, a frame without a MAC address of the second electronic device.

By changing the AID, obfuscating the AID and/or removing one or more MAC addresses, these communication techniques may facilitate improved security and/or privacy in the WLAN. For example, the communication techniques may remove MAC addresses from MU PPDUs and triggered PPDUs. Instead of the MAC addresses, the second AID may be visible, e.g., to eavesdroppers, in MLJ PPDU or a trigger frame. By enhancing security and privacy, the communication techniques may encourage use of the WLAN. Consequently, the communication techniques may improve the user experience and customer satisfaction.

Note that the communication techniques may be used during wireless communication between electronic devices in accordance with a communication protocol, such as a communication protocol that is compatible with an IEEE 802.11 standard (which is sometimes referred to as Wi-Fi). In some embodiments, the communication techniques are used with IEEE 802.11be, IEEE 802.11bi or IEEE802.11bn, which are used as illustrative examples in the discussion that follows. However, these communication techniques may also be used with a wide variety of other communication protocols, and in electronic devices (such as portable electronic devices or mobile devices) that can incorporate multiple different radio access technologies (RATs) to provide connections through different wireless networks that offer different services and/or capabilities.

An electronic device can include hardware and software to support a wireless personal area network (WPAN) according to a WPAN communication protocol, such as those standardized by the Bluetooth Special Interest Group and/or those developed by Apple (in Cupertino, California) that are referred to as an Apple Wireless Direct Link (AWDL). Moreover, the electronic device can communicate via: a wireless wide area network (WWAN), a wireless metro area network (WMAN), a WLAN, near-field communication (NFC), a cellular-telephone or data network (such as using a third generation (3G) communication protocol, a fourth generation (4G) communication protocol, e.g., Long Term Evolution or LTE, LTE Advanced (LTE-A), a fifth generation (5G) communication protocol, or other present or future developed advanced cellular communication protocol) and/or another communication protocol. In some embodiments, the communication protocol includes a peer-to-peer communication technique.

The electronic device, in some embodiments, can also operate as part of a wireless communication system, which can include a set of client devices, which can also be referred to as stations or client electronic devices, interconnected to an access point, e.g., as part of a WLAN, and/or to each other, e.g., as part of a WPAN and/or an 'ad hoc' wireless network, such as a Wi-Fi direct connection. In some embodiments, the client device can be any electronic device that is capable of communicating via a WLAN technology, e.g., in accordance with a WLAN communication protocol. Furthermore, in some embodiments, the WLAN technology can include a Wi-Fi (or more generically a WLAN) wireless communication subsystem or radio, and the Wi-Fi radio can implement an IEEE 802.11 technology, such as one or more of: IEEE 802.11a; IEEE 802.11b; IEEE 802.11g; IEEE 802.11-2007; IEEE 802.11n; IEEE 802.11-2012; IEEE 802.11-2016; IEEE 802.11ac; IEEE 802.11ax, IEEE 802.11ba, IEEE 802.11be, IEEE 802.11me, IEEE 802.11bi, IEEE802.11bn or other present or future developed IEEE 802.11 technologies.

In some embodiments, the electronic device can act as a communications hub that provides access to a WLAN and/or to a WWAN and, thus, to a wide variety of services that can be supported by various applications executing on the electronic device. Thus, the electronic device may include an 'access point' that communicates wirelessly with other electronic devices (such as using Wi-Fi), and that provides access to another network (such as the Internet) via IEEE 802.3 (which is sometimes referred to as 'Ethernet'). However, in other embodiments the electronic device may not be an access point. As an illustrative example, in the discussion that follows the electronic device is or includes an access point.

Additionally, it should be understood that the electronic devices described herein may be configured as multi-mode wireless communication devices that are also capable of communicating via different 3G and/or second generation (2G) RATs. In these scenarios, a multi-mode electronic device or UE can be configured to prefer attachment to LTE networks offering faster data rate throughput, as compared to other 3G legacy networks offering lower data rate throughputs. For example, in some implementations, a multi-mode electronic device is configured to fall back to a 3G legacy network, e.g., an Evolved High Speed Packet Access (HSPA+) network or a Code Division Multiple Access (CDMA) 2000 Evolution-Data Only (EV-DO) network, when LTE and LTE-A networks are otherwise unavailable. More generally, the electronic devices described herein may be capable of communicating with other present or future developed cellular-telephone technologies.

In accordance with various embodiments described herein, the terms 'wireless communication device,' 'electronic device,' 'mobile device,' 'mobile station,' 'wireless station,' 'wireless access point,' 'station,' 'access point' and 'user equipment' (UE) may be used herein to describe one or more consumer electronic devices that may be capable of performing procedures associated with various embodiments of the disclosure.

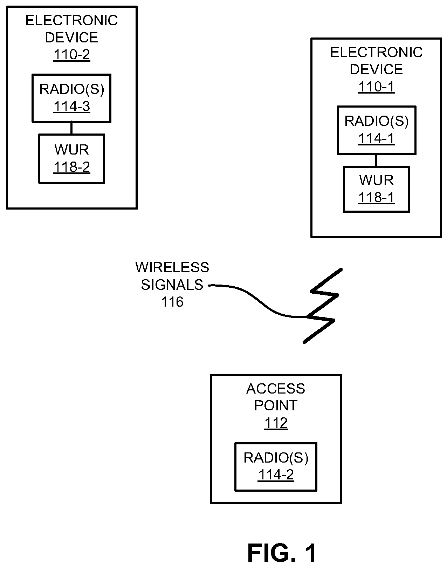

FIG. 1 presents a block diagram illustrating an example of electronic devices communicating wirelessly. Notably, one or more electronic devices 110 (such as a smartphone, a laptop computer, a notebook computer, a tablet, or another such electronic device) and access point 112 may communicate wirelessly in a WLAN using an IEEE 802.11 communication protocol. Thus, electronic devices 110 may be associated with or may have one or more connections with access point 112. For example, electronic devices 110 and access point 112 may wirelessly communicate while: detecting one another by scanning wireless channels, transmitting and receiving beacons or (equivalently) beacon frames on wireless channels, establishing connections (for example, by transmitting connect requests), and/or transmitting and receiving packets or frames (which may include the request and/or additional information, such as data, as payloads). Note that access point 112 may provide access to a network, such as the Internet, via an Ethernet protocol, and may be a physical access point or a virtual or 'software' access point that is implemented on a computer or an electronic device. In the discussion that follows, electronic devices 110 are sometimes referred to as 'recipient electronic devices.'

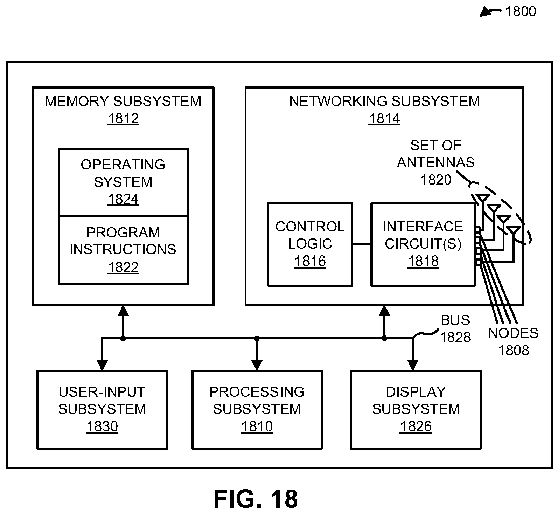

As described further below with reference to FIG. 18, electronic devices 110 and access point 112 may include subsystems, such as a networking subsystem, a memory subsystem, and a processor subsystem. In addition, electronic devices 110 and access point 112 may include radios 114 in the networking subsystems. More generally, electronic devices 110 and access point 112 can include (or can be included within) any electronic devices with networking subsystems that enable electronic devices 110 and access point 112, respectively, to wirelessly communicate with another electronic device. This can include transmitting beacon frames on wireless channels to enable the electronic devices to make initial contact with or to detect each other, followed by exchanging subsequent data/management frames (such as connect requests) to establish a connection, configure security options (e.g., IPSec), transmit and receive packets or frames via the connection, etc.

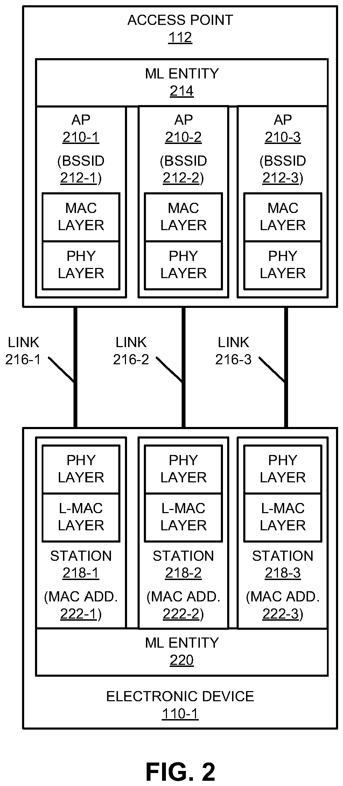

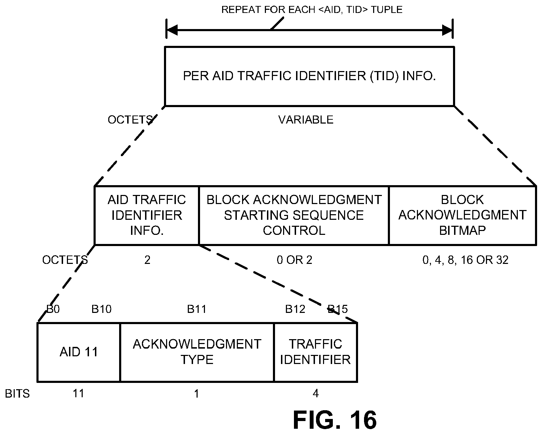

As can be seen in FIG. 1, wireless signals 116 (represented by a jagged line) are communicated by one or more radios 114-1 and 114-2 in electronic device 110-1 and access point 112, respectively. For example, as noted previously, electronic device 110-1 and access point 112 may exchange packets or frames using a Wi-Fi communication protocol in a WLAN. As illustrated further below with reference to FIGs. 2-18, one or more radios 114-1 may receive wireless signals 116 that are transmitted by one or more radios 114-2 via one or more links between electronic device 110-1 and access point 112. Alternatively, the one or more radios 114-1 may transmit wireless signals 116 that are received by the one or more radios 114-2.

In some embodiments, wireless signals 116 are communicated by one or more radios 114 in electronic devices 110 and access point 112, respectively. For example, one or more radios 114-1 and 114-3 may receive wireless signals 116 that are transmitted by one or more radios 114-2 via one or more links between electronic devices 110-1 and 110-2, and access point 112.

Note that the one or more radios 114-1 may consume additional power in a higher-power mode. If the one or more radios 114-1 remain in the higher-power mode even when they are not transmitting or receiving packets or frames, the power consumption of electronic device 110-1 may be needlessly increased. Consequently, electronic devices 110 may include wake-up radios (WURs) 118 that listen for and/or receive wake-up frames (and/or other wake-up communications), e.g., from access point 112. When a particular electronic device (such as electronic device 110-1) receives a wake-up frame, WLTR 118-1 may selectively wake-up radio 114-1, e.g., by providing a wake-up signal that selectively transitions at least one of the one or more radios 114-1 from a lower-power mode to the higher-power mode.

IEEE 802.11be has proposed the use of multiple concurrent links between electronic devices, such as access point 112 and one or more of electronic device 110. For example, as shown in FIG. 2, which presents a block diagram illustrating an example of electronic devices communicating wirelessly, access point 112 may be an access point MLD that includes multiple access points 210, which are cohosted or collocated in access point 112. In the present discussion, 'cohosted' or 'co-located' means that access points 210 are physically or virtually implemented in the same access point MLD, or are affiliated with the same access point MLD. Note that this meaning of 'cohosted' does not indicate that access points 210 have the same primary 20 MHz channel. Access points 210 may have associated basic service set identifiers (BSSIDs) 212, and media access control (MAC) and physical (PHY) layers (including separate radios, which may be included in the same or different integrated circuits). Note that access point 112 may have an ML entity 214 having an MLD MAC address, an ML identifier, a service set identifier (SSID), and that may provide security for access points 210.

Moreover, access points 210 may have different concurrent links 216 in different bands of frequencies (such as a link 216-1 with a link identifier 1 in a 2.4 GHz band of frequencies, a link 216-2 with a link identifier 2 in a 5 GHz band of frequencies and a link 216-3 with a link identifier 3 in a 6 GHz bands of frequencies) with stations 218 in at least electronic device 110-1, which is a non-access point MLD. These stations may have associated lower MAC and PHY layers (including separate radios, which may be included in the same or different integrated circuits). In addition, electronic device 110-1 may have an ML entity 220 having an MLD MAC address.

For example, the access point MLD may have three radios. One radio may operate on a 2.4 GHz band of frequencies, and the other radios may operate on the 5/6 GHz bands of frequencies. The access point MLD may create three access points 210, operating on a 2.4 GHz channel, a 5 GHz channel, and a 6 GHz channel respectively. The three access points 210 may operate independently, each of which has at least one BSS with different BSSIDs 212. (While FIG. 2 illustrates the access point MLD with three access points 210, more generally the access point MLD may include up to 15 access points with one or more access points in a given band of frequencies.) Moreover, each of the access points 210 may accommodate both legacy non-access point stations as well as non-access point MLD stations 218. Furthermore, each of access points 210 may transmit its own beacon frames using its own BSSID. Additionally, the access point MLD may have ML entity 214, identified by an MLD address (such as an MLD MAC address). This MAC address may be used to pair with ML entity 220 of the associated non-access point MLD stations 218.

Moreover, the non-access point MLD station (e.g., electronic device 110-1) may have two or three radios. One radio may operate on a 2.4 GHz band of frequencies, and the other radios may operate on the 5/6 GHz bands of frequencies. When the non-access point MLD establishes a ML association with the access point MLD, it may create up to three stations 218, each of which associates to one of access points 210 within the access point MLD. Each of stations 218 may have a different over-the-air MAC address 222. The non-access point MLD may also have ML entity 220, identified by another MLD address (such as another MLD MAC address). This MLD MAC address may be used to pair with ML entity 214 of the associated access point MLD.

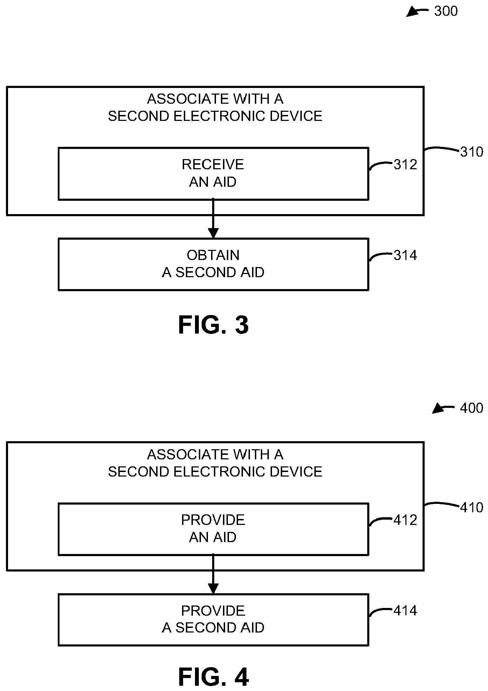

As noted previously, the communication of frames that include the AID corresponding to an electronic device (such as electronic device 110-1) may result in security and/or privacy concerns. In order to address these problems, as described further below with reference to FIGs. 3-17, in the communication techniques the AID may be changed and/or obfuscated in frames. Notably, in a first group of embodiments an electronic device (such as electronic device 110-1) obtains a second AID. Notably, while associating or associated with a second electronic device (such as access point 112), electronic device 110-1 may receive, from access point 112, an AID corresponding to electronic device 110-1 for use when communicating frames in the WLAN. Moreover, while associated with access point 112, electronic device 110-1 may obtain the second AID corresponding to electronic device 110-1 for use when communicating second frames in the WLAN, where the associating includes replacing the AID with the second AID. Note that obtaining the second AID may include: electronic device 110-1 selecting the second AID from a predefined set of AIDs, which were previously received from access point 112; electronic device 110-1 receiving, from access point 112, the second AID; electronic device 110-1 generating the second AID using a predetermined or predefined technique (such as a formula or an equation); or electronic device 110-1 receiving, from a third electronic device, the second AID.

Moreover, in a second group of embodiments, a second electronic device (such as access point 112) that provides a second AID is described. Notably, while associating or associated with an electronic device (such as electronic device 110-1), access point 112 may provide, addressed to electronic device 110-1, the AID corresponding to electronic device 110-1 for use when communicating frames in the WLAN. Moreover, while associated with electronic device 110-1, access point 112 may provide, addressed to electronic device 110-1, a second AID corresponding to electronic device 110-1 for use when communicating second frames in the WLAN, where the associating includes replacing the AID with the second AID.

Furthermore, in a third group of embodiments, an electronic device (such as electronic device 110-1) may transmit a frame. Notably, electronic device 110-1 may transmit, addressed to a second electronic device (such as access point 112) in a WLAN, the frame without a MAC address of electronic device 110-1.

Alternatively or additionally, in a fourth group of embodiments, an electronic device (such as electronic device 110-1) may transmit a frame. Notably, electronic device 110-1 may transmit, addressed to a second electronic device (such as access point 112) in a WLAN, a frame without a MAC address of access point 112.

In some embodiments of the disclosed communication techniques, privacy enhanced (PE) electronic devices may be able to change the AID value of an associated privacy enhanced station. As noted previously, the AID may only have 11 bits to identify a station. Because a calculation rule for the new AID value may not be possible (e.g., because it may take up too much space in frames and/or may consume too many resources), an access point may need to assign new AID values to the associated station(s). For example, the access point may change the AID value of a station while a station is associated with the access point. In some embodiments, the access point may provide a new AID, e.g., every 10 min., or may provide a set of AIDs for subsequent use and the current AID on the set may be switched, e.g., every 10 min.

Alternatively or additionally, the AID value may be obfuscated. For example, a constant basic service set (BSS)-wide offset may be added to the AID value to obfuscate it. The obfuscated AID values may protect the privacy of the associated station(s) from eavesdroppers. Moreover, the obfuscated AID value may change frequently (e.g., once per beacon interval, such as every 100 ms, or per PPDU), which may make station tracking more complicated.

In some embodiments, station MAC headers may be removed from the MAC protocol data units (MPDUs) transmitted in triggered reservation units or in a downlink MU PPDU. Instead, the access-point MAC address and an AID (such as an obfuscated AID) may be used. Note that station privacy may be improved if an associated station is identified by an AID in: a trigger frame, in which the transmitter address and AID identify the transmitter and receiver; a MU PPDU, in which the BSS color and AID identify the transmitter and receiver; and a multi-station block acknowledgment, in which the transmitter address and AID identify the transmitter and receiver. While the access-point MAC address may be removed, this may result in more collisions.

In summary, the disclosed communication techniques define AID field use in address change. Notably, the AID may be changed and/or obfuscated. This may improve privacy of the MU PPDU and triggered PPDU transmissions. Moreover, the disclosed communication techniques provide a mechanism for removing the MAC addresses from the MU PPDU and triggered PPDUs. For example, only the transmitter address and AID may be visible to eavesdroppers in a trigger frame. Additionally, BSS color and AID may be visible in the MU PPDU. The receiver may decrypt the PPDU to ensure that it is the correct receiver before acknowledging receipt of the frame.

These capabilities may improve security, privacy and/or the communication performance when communicating in a WLAN using electronic devices, such as an access point 112, electronic device 110-1, and/or legacy electronic devices.

Referring back to FIG. 1, note that access point 112 and one or more electronic devices (such as electronic devices 110-1 and/or 110-2) may be compatible with an IEEE 802.11 standard that includes trigger-based channel access (such as IEEE 802.11ax). However, access point 112 and the one or more electronic devices may also communicate with one or more legacy electronic devices that are not compatible with the IEEE 802.11 standard (i.e., that do not use multi-user trigger-based channel access). In some embodiments, access point 112 and the one or more electronic devices use multi-user transmission (such as Orthogonal Frequency Division Multiple Access or OFDMA). For example, the one or more radios 114-2 may provide one or more trigger frames for the one or more electronic devices. Moreover, in response to receiving the one or more trigger frames, the one or more radios 114-1 may provide one or more group or block acknowledgments to the one or more radios 114-2. For example, the one or more radios 114-1 may provide the one or more group acknowledgments during associated assigned time slot(s) and/or in an assigned channel(s) in the one or more group acknowledgments. However, in some embodiments one or more of electronic devices 110 may individually provide acknowledgments to the one or more radios 114-2. Thus, the one or more radios 114-1 (and, more generally, radios 114 in the electronic devices 110-1 and/or 110-2) may provide one or more acknowledgments to the one or more radios 114-2.

In the described embodiments, processing a packet or frame in one of electronic devices 110 and access point 112 includes: receiving wireless signals 116 encoding a packet or a frame; decoding/extracting the packet or frame from received wireless signals 116 to acquire the packet or frame; and processing the packet or frame to determine information contained in the packet or frame (such as data in the payload).

In general, the communication via the WLAN in the communication techniques may be characterized by a variety of communication-performance metrics. For example, the communication-performance metric may include any/all of: an RSSI, a data rate, a data rate for successful communication (which is sometimes referred to as a 'throughput'), a latency, an error rate (such as a retry or resend rate), a mean-square error of equalized signals relative to an equalization target, inter-symbol interference, multipath interference, a signal-to-noise ratio (SNR), a width of an eye pattern, a ratio of a number of bytes successfully communicated during a predetermined or predefined time interval (such as a time interval between, e.g., 1 and 10 s) to an estimated maximum number of bytes that can be communicated in the predetermined or predefined time interval (the latter of which is sometimes referred to as the 'capacity' of a communication channel or link), and/or a ratio of an actual data rate to an estimated data rate (which is sometimes referred to as 'utilization').

Although we describe the network environment shown in FIG. 1 as an example, in alternative embodiments, different numbers and/or types of electronic devices may be present. For example, some embodiments may include more or fewer electronic devices. As another example, in other embodiments, different electronic devices can be transmitting and/or receiving packets or frames. In some embodiments, multiple links may be used during communication between electronic devices 110. Consequently, one of electronic devices 110 may perform operations in the communication techniques.

FIG. 3 presents a flow diagram illustrating an example method 300 for obtaining a second AID. This method may be performed by an electronic device, such as electronic device 110-1 in FIG. 1. Note that the communication between the electronic device and a second electronic device (such as access point 112 in FIG. 1) may be compatible with an IEEE 802.11 communication protocol.

During operation, the electronic device associates with the second electronic device (operation 310) in a WLAN, where, while associating or associated with the second electronic device, the electronic device receives, from the second electronic device, an AID (operation 312) of the electronic device for use when communicating frames in the WLAN. Moreover, while associated with the second electronic device, the electronic device obtains the second AID (operation 314) of the electronic device for use when communicating second frames in the WLAN.

In some embodiments, the associating may include replacing the AID with the second AID and where obtaining the second AID includes: selecting the second AID from a predefined set of AIDs; receiving, from the second electronic device, the second AID; generating the second AID using a predetermined or predefined technique (such as a formula or an equation); or receiving, from a third electronic device, the second AID.

Moreover, the second AID may be obtained (operation 314) a predetermined or predefined time interval following the receiving (operation 312) of the AID.

Furthermore, while associating or associated with the second electronic device, the predefined set of AIDs may be received from the second electronic device.

Additionally, the electronic device may obfuscate a current AID used by the electronic device when communicating the frames or the second frames. Note that the current AID may include the AID or the second AID. For example, the obfuscation may be performed by adding a value associated with the second electronic device to the current AID. In some embodiments, the value may be changed in accordance with a second time interval. Notably, the second time interval may include a beacon interval of the second electronic device.

Alternatively or additionally, the frames or the second frames may indicate that the current AID is obfuscated.

Moreover, the electronic device may include a non-access point MLD and the current AID may be used for multiple links in the WLAN. In some embodiments, the obfuscating may be MLD-specific.

Furthermore, the current AID may be used for only one link in the WLAN. In some embodiments, the obfuscating may be link-specific.

FIG. 4 presents a flow diagram illustrating an example method 400 for providing a second AID. This method may be performed by an electronic device, such as access point 112 in FIG. 1. Note that the communication between the electronic device and a second electronic device (such as electronic device 110-1 in FIG. 1) may be compatible with an IEEE 802.11 communication protocol.

During operation, the electronic device may associate with a second electronic device (operation 410) in a WLAN, where, while associating or associated with the second electronic device, the electronic device may provide, addressed to the second electronic device, an AID (operation 412) of the second electronic device for use when communicating frames in the WLAN. Moreover, while associated with the second electronic device, the electronic device may provide, addressed to the second electronic device, a second AID (operation 414) of the second electronic device for use when communicating second frames in the WLAN, where the associating includes replacing the AID with the second AID.

Note that the second AID may be provided (operation 414) a predetermined or predefined time interval following the providing (operation 412) of the AID.

Moreover, providing the AID (operation 412) may include providing a predefined set of AIDs. Note that adjacent AIDs in the predefined set of AIDs may be unique relative to corresponding AIDs in another predefined set of AIDs provided by the electronic device to a third electronic device that is associated with the electronic device.

Furthermore, the electronic device may provide, for the second electronic device, information indicating a value used in obfuscating the AID or the second AID when used to communicate the frames or the second frames, respectively.

Additionally, the second electronic device may include a non-access point MLD and the current AID may be used for multiple links in the WLAN. In some embodiments, the obfuscating is MLD-specific.

Moreover, the current AID may be used for only one link in the WLAN. In some embodiments, the obfuscating may be link-specific.

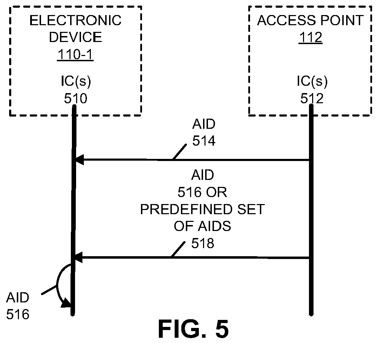

The communication techniques are further illustrated in FIG. 5, which presents a flow diagram illustrating an example of communication between electronic device 110-1 and access point 112. During operation, one or more interface circuits (or interface circuitry) 510 in electronic device 110-1 may associate with access point 112. While associating or associated with access point 112, one of the one or more interface circuits (or interface circuitry) 512 in access point 112 may provide, addressed to electronic device 110-1, an AID 514 of electronic device 110-1 for use when communicating frames in a WLAN. One of the one or more interface circuits (or interface circuitry) 410 may receive AID 514.

Moreover, while associated with access point 112, the one or more interface circuits 510 may obtain an AID 516 of electronic device 110-1 for use when communicating second frames in the WLAN, where AID 516 replaces AID 514. Notably, one or more interface circuit 512 may provide a predefined set of AIDs 518. Then, one of the one or more interface circuits 510 may select AID 516 from the predefined set of AIDs 518. Alternatively, one of the one or more interface circuits 512 may provide, to electronic device 110-1, AID 516. AID 516 may be received by one of the one or more interface circuits 510.

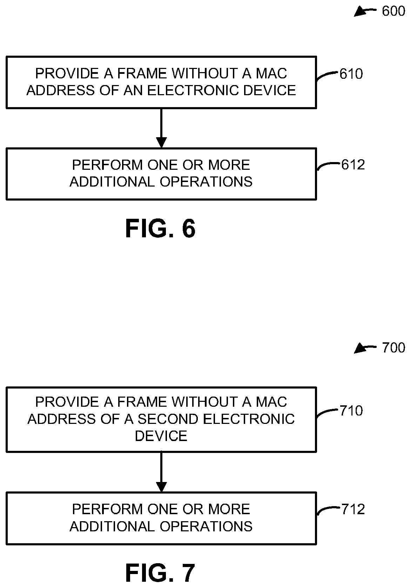

FIG. 6 presents a flow diagram illustrating an example method 600 for transmitting a frame. This method may be performed by an electronic device, such as electronic device 110-1 or access point 112 in FIG. 1. Note that the communication with a second electronic device (such as access point 112 or electronic device 110-1 in FIG. 1) may be compatible with an IEEE 802.11 communication protocol.

During operation, the electronic device transmits, addressed to a second electronic device in a WLAN, the frame without a MAC address of the electronic device (operation 610).

In some embodiments, before, during or after operation 610, the electronic device may optionally perform one or more additional operations (operation 612).

For example, the electronic device may provide, addressed to the second electronic device, an association request that indicates the electronic device supports communication of frames without the MAC address of the electronic device.

Moreover, the electronic device may receive, associated with the second electronic device, an association response that indicates the second electronic device supports communication of the frames without the MAC address of the electronic device.

Furthermore, the frame may include a data frame in response to a trigger frame associated with the second electronic device.

In some embodiments, the frame may include: a QoS data frame, a QoS null frame, a management frame, or a block acknowledgment.

Note that the frame may include an AID corresponding to the electronic device. This AID may be obfuscated.

FIG. 7 presents a flow diagram illustrating an example method 700 for transmitting a frame. This method may be performed by an electronic device, such as electronic device 110-1 or access point 112 in FIG. 1. Note that the communication with a second electronic device (such as access point 112 or electronic device 110-1 in FIG. 1) may be compatible with an IEEE 802.11 communication protocol.

During operation, the electronic device transmits, addressed to a second electronic device in a WLAN, a frame without a MAC address (operation 710) of the second electronic device.

In some embodiments, before, during or after operation 710, the electronic device may optionally perform one or more additional operations (operation 712).

For example, the electronic device may receive, associated with the second electronic device, an association request that indicates the second electronic device supports communication of frames without the MAC address of the second electronic device.

Moreover, the electronic device may provide, addressed to the second electronic device, an association response that indicates the electronic device supports communication of the frames without the MAC address of the second electronic device.

Furthermore, the frame may include a trigger frame. In some embodiments, the trigger frame may include: a BSR poll frame, or a multi-user BAR frame.

In some embodiments of methods 300 (FIG. 3), 4 (FIG. 4), 6 (FIG. 6) and/or 7, there may be additional or fewer operations. Further, one or more different operations may be included. Moreover, the order of the operations may be changed, and/or two or more operations may be combined into a single operation or performed at least partially in parallel.

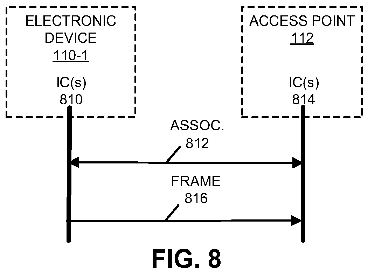

The communication techniques are further illustrated in FIG. 8, which presents a flow diagram illustrating an example of communication between electronic device 110-1 and access point 112. During operation, one or more interface circuits (or interface circuitry) 810 in electronic device 110-1 may associate 812 with one or more interface circuits (or interface circuitry) 814 in access point 112. In some embodiments, during association 812, at least one of the one or more interface circuits 810 may provide, to access point 112, an association request that indicates electronic device 110-1 supports communication of frames without the MAC address of electronic device 110-1. Moreover, during association 812, at least one of the one or more interface circuit (or interface circuitry) 814 may provide an association response that indicates access point 112 supports communication of the frames without the MAC address of electronic device 110-1.

Then, one of the one or more interface circuits 810 may transmit, addressed to one of the one or more interface circuit 814, a frame 816 without a MAC address of electronic device 110-1 and/or without a MAC address of access point 112.

While communication between the components in FIGs. 5 and 8 are illustrated with unilateral or bilateral communication (e.g., lines having a single arrow or dual arrows), in general a given communication operation may be unilateral or bilateral.

In some embodiments, using the disclosed communication techniques, in the disclosed communication techniques, privacy enhanced (PE) electronic devices may be able to change the AID value of an associated privacy enhanced station. As noted previously, the AID may only have 11 bits to identify a station. Because a calculation rule for the new AID value may not be possible (e.g., because it may take up too much space in frames and/or may consume too many resources), an access point may need to assign new AID values to the associated station(s). For example, the access point may change the AID value of a station while a station is associated with the access point. In some embodiments, the access point may provide a new AID, e.g., every 10 min., or may provide a set of AIDs for subsequent use and the current AID on the set may be switched, e.g., every 10 min.

Alternatively or additionally, the AID value may be obfuscated. For example, a constant BSS-wide offset may be added to the AID value to obfuscate it. The obfuscated AID values may protect the privacy of the associated station(s) from eavesdroppers. Moreover, the obfuscated AID value may change frequently (e.g., once per beacon interval, such as every 100 ms, or per PPDU), which may make station tracking more complicated.

In some embodiments, station MAC headers may be removed from the MPDUs transmitted in triggered reservation units or in a downlink MU PPDU. Instead, the access-point MAC address and an AID (such as an obfuscated AID) may be used. Note that station privacy may be improved if an associated station is identified by an AID in: a trigger frame, in which the transmitter address and AID identify the transmitter and receiver; a MU PPDU, in which the BSS color and AID identify the transmitter and receiver; and a multi-station block acknowledgment, in which the transmitter address and AID identify the transmitter and receiver. While the access-point MAC address may be removed, this may result in more collisions.

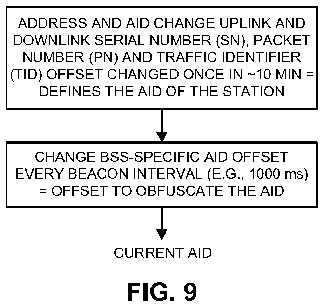

Moreover, as shown in FIG. 9, which presents a flow diagram illustrating an example of a method for privacy enhancement, the AID value may have two levels of randomization. Notably, in one level, AID values may be changed as part of the MAC address set change process. For example, the AID value may be assigned by the access point. In some embodiments, the access point may signal AID values for multiple address randomization times at once or at the same time. Alternatively or additionally, the AID values may be rotated within a group of AID values, or the access point may assign new AID values.

Furthermore, in a second level, AID-values obfuscation may be used. Notably, an access-point or BSS-specific offset may be added to the AID values transmitted over the air. The AID offset may be updated frequently. For example, the AID offset value may change every beacon period (such as, every 100 ms). Alternatively or additionally, the AID offset values may be changed more often than the MAC addresses. This may make downlink MU PPDUs and trigger-based PPDUs harder to track than single-user PPDUs.

Thus, the MAC address and the AID change of the uplink and downlink serial number, packet number (PN), traffic indication (TID) offset may define the AID corresponding to the station (e.g., once every 10 min.). Then, a BSS-specific AID offset may be applied to obtain the current AID. The BSS-specific AID offset may be changed, e.g., each beacon interval (such as every 100 ms).

As shown in Table 1, which presents an example of AID mapping for two stations, when the AID value is changed, an access point may assign new AID value(s) to the associated station(s). The AID values may be located closely in a traffic indication map (TIM) bitmap (which may indicate AID values that are in use) in order to reduce a beacon frames size. Moreover, an access point may assign AID values to multiple address changes in one signaling. For example, an access point may assign ten AID values, including the next AID value and AID value for nine following or subsequent address changes. In some embodiments, a station may rotate the AID values in the address changes among the AID group specified by the access point. Notably, a station may rotate the allocated AID values if the access point does not allocate new AID values. The access point may make sure that it does not allocate the same AID to two or more stations in the address set at the address change time.

Table 1.

| Address Set Number | AID Value for Station 1 | AID Value for Station 2 |
|---|---|---|
| 1 | 12 | 10 |

(continued)

| Address Set Number | AID Value for Station 1 | AID Value for Station 2 |
|---|---|---|
| 2 | 101 | 14 |
| 3 | 200 | 50 |
| 4 | 30 | 11 |
| 5 | 58 | 101 |

Note that different stations may change their AID value at different times, such as when the MAC address is changed. An Access point may have multiple associated stations and a given associated station may change its AID value at a different time from one or more of the other associated stations. In some embodiments, the associated stations change their AID values at different times from each other. Moreover, as noted previously, the access point may track the AID values to avoid collisions. In some embodiments, adjacent AID values in a set or group of AID values may be unique among associated stations, so that a new AID value or the previous AID value do not have collisions with the AID value(s) of other stations. This may ensure that the previous AID value in frames already in a buffer with the AID value changes and a new AID value do not have collisions with any other AID value in use.

Referring to FIG. 2, when there are link-specific station and access-point MAC addresses, the AID value may be associated with the MLD value or may be link-specific (the over-the-air MAC address may be link specific). Notably, IEEE 802.1 The may allocate a single AID value for a station, and the same AID value may be used for all links in the station. The use of the same AID value may make tracking of the station possible in multiple links, e.g., an attacker may detect the links in which the station operates by checking the AID values.

In order to address this problem, in the disclosed communication techniques, the AID value may be: on an MLD level, e.g., a station MLD may have a single AID value that is used in all links; or on a link level, e.g., each link may have a separate AID value. IEEE 802.11bi has proposed link-specific over-the-air MAC address changes, so a link-specific AID value may be changed at the same time as MAC addresses. Note that an MLD-specific AID value may be changed if the addresses in all links are changed at the same time. Alternatively, an MLD-specific AID value change may be performed when the MAC addresses on a link change, e.g., the AID value may be changed when the addresses for link 2 change. Moreover, the AID offset may be link-specific or MLD-specific. For example, if a link identifier is included in the calculation formula, the AID offset may be link-specific. Table 2 presents an example of AIDs and AID offsets.

Table 2.

| Alternative Number | AID Value | AID Obfuscation | Number of AIDs Per Station MLD |
|---|---|---|---|
| 1 | Link Specific | Link Specific | Number of Links |
| 2 | MLD Specific | | 1, Obfuscated Per Link |
| 3 | | MLD Specific | 1 |

Note that an access point may have one or more legacy associated stations. A given legacy station may only have a single AID value for all links.

Thus, the AID value and the AID obfuscation may be link-specific, in which case the number of AIDs per station MLD may equal the number of links. Alternatively, the AID value may be MLD-specific and the AID obfuscation may be link-specific, in which case the number of AIDs per station MLD may be one (which may be obfuscated per link). Moreover, the AID value and the AID obfuscation may be MLD-specific, in which case the number of AIDs per station MLD may be one.

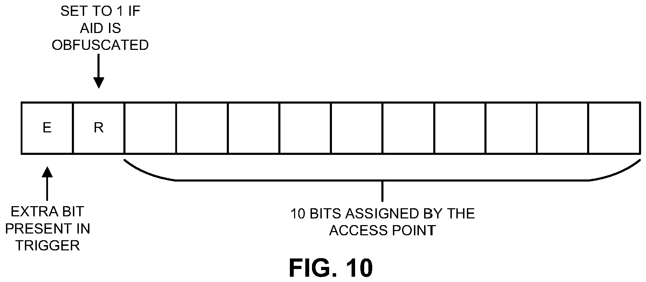

Furthermore, FIG. 10 presents a drawing illustrating an example of AID obfuscation. As shown in Table 3, which presents examples of AID values and their use, in AID obfuscation the smallest AID values may signal in beacon frames the availability of the buffered group frames. The number of bits used for buffered group frames availability signaling may depend on multi-BSSID and access-point MLD topology. Additionally, the individual station AID values may be used by legacy stations and non-obfuscated privacy-enhanced stations. These AID values may not be obfuscated. Note that the first 10 bits (1024 values) may be allocated individual station AIDs. In addition, bit 11 may be used to indicate whether or not the AID is obfuscated, and bit 12 may be an extra bit in a trigger frame. In some embodiments, AID values between 0-47 may be used for buffered group data frames signaling in a beacon frame, AID values between 48-1023 may be used for individual station AID allocation, AID values between 1024-2007 may be the obfuscated AID value (such as a BSS-wide offset or constant value that is added or padded to the station-specific AID value), AID values between 2008-2047 may be special reserved values, and AID values between 2047-4095 may be additional values for trigger frames.

Table 3.

| AID Value | Use |
|---|---|
| 0-47 | Buffered Group Data Frames Signaling in Beacon |
| 48-1023 | Individual Station AID Allocation |
| 1024-2007 | Obfuscated AID Values |
| 2008-2047 | Special Reserved Values |
| 2048-4095 | Additional Values for Trigger Frames |

As noted previously, the obfuscated AID may improve station privacy. Moreover, the obfuscated AID may be used in trigger frames, MU PPDUs, multi-station block acknowledgments and/or the TIM elements of beacon frames. Note that a beacon frame may include non-obfuscated AID values in the TIM element in order to shorten the beacon frame size.

Additionally, the AID offset calculation may be

$$AID\ Offset = truncate_{10}(HMAC - SHA - 1 - 128 \cdot (Beacon\ Serial\ Number, Link\ Identifier, AID\ Obfuscation, SALT_{BSS}, SALT_{PPDU})),$$

where the beacon serial number is the serial number of the current beacon frame (e.g., a value between 0 and 4095, and which is increased at each targeted beacon transmission time or TBTT, such as 102.4 transmission units or TUs), the link identifier is the identifier of the link (e.g., a value between 0 and 14), AID obfuscation is text padding, $SALT_{sss}$ is a value assigned by the access point (e.g., a value between 0 and $2^{32}$), and $SALT_{PPDU}$ is a value defined in the frame (e.g., a value between 0 and $2^{16}$). Note that a special AID value of 2042 may be allocated to indicate that reservation-unit allocation information contains a $SALT_{PPDU}$ value. This AID value may be transmitted as the first reservation-unit allocation to maximize the time of a receiver to obtain the value. The AID offset per beacon period may depend on or be a function of the TBTT value (or the number of TBTTs) and a BSS-specific $SALT_{sss}$ value, and the AID offset per PPDU may depend on or be a function of a PPDU-specific $SALT_{PPDU}$ value and a BSS-specific $SALT_{sss}$ value. In general, a SALT value may include a value that makes the AID offset more random.

More generally, the AID offset duration per beacon period may include: a TBTT value (a number of TBTTs) and a BSS-specific $SALT_{BSS}$ value. Alternatively or additionally, the AID offset duration per PPDU may include: a PPDU-specific $SALT_{PPDU}$ value and a BSS-specific $SALT_{BSS}$ value.

Referring to FIG. 10, when an access point transmits an obfuscated AID value, then bit 11 (R) may be set to a value of '1'. Furthermore, the lowest 10 bits may be set to $(AID_{STA} + AID_{offset})modulo(983)$, where the modulo 983 may be calculated by 2007 (the largest AID value for unicast) -210 (1024). Note that 983 may be the maximum number of stations that may have obfuscated AID in an access point. Additionally, the station that receives an AID value may check the value of bit 11 (R). If the value is '0', then the station may check whether the 10 lowest bits match the $AID_{STA}$ value. Alternatively, if the value is '1', then the station may check if $AID_{received}$ - $AID_{offset}$ matches the $AID_{STA}$ value.

We now discuss the embodiments of removing the MAC address headers in allocated reserved units. Table 4 presents an example of the privacy improvement for different addressing types in frames. When the addressing type only includes the access-point MAC address and the station is identified by the AID, each transmitted MPDU and MAC management protocol data unit (MMPDU) may include the access-point MAC address and the AID may identify the station. Thus, the station MAC address may not be sent over the air. The AID value may be obfuscated/changed more frequently than the MAC address, which may improve the privacy of the station. Alternatively, when the addressing type includes the access-point and the station MAC addresses, each MPDU and MMPDU may include a randomized station and access-point identifier. The access-point and station MAC address change may define the privacy level of the station and the access point. Note that when both the station and the access-point MAC addresses are removed, there may be more collisions.

Table 4.

| Addressing Type | Addressing Present | Privacy Improvement |
|---|---|---|
| Access Point Address Only AID Identifies the Station | Each Transmitted MPDU and MMPDU Contains Access Point MAC Address. AID Identifies the Station | Station MAC Address Is Not Sent Over the Air. AID Value May Be Obfuscated/Changed More Frequently Than MAC Address. This Improves Associated Station Privacy. |
| Access Point and Station Addresses | Each Transmitted MPDU and MMPDU Contains Randomized Station and Access Point Identifier | The Access Point and Station MAC Addresses Change Defines the Privacy Level of the Station and the Access Point. |

Moreover, the privacy of the station and the access point may depend on the frequency of the MAC address changes. By using a SALT value in the MAC address headers, the access-point and the station MAC addresses may be changed in each transmitted PPDU. In some embodiments, MAC-address randomization may not be performed as frequently as AID randomization. In these embodiments, the station privacy may be implemented by using only a randomized AID value to identify the station. Note that the access-point MAC address may be present in a trigger frame and/or a downlink MU PPDU to identify the transmitter of the frame. Additionally, in some embodiments, the access-point and station MAC addresses may be completely removed from trigger frame and/or the downlink MU PPDU.

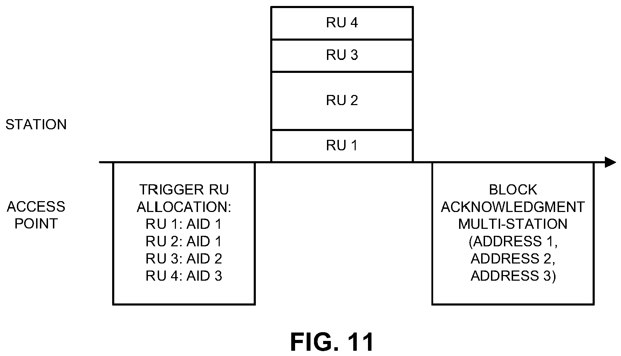

Furthermore, as shown in FIG. 11, which presents a drawing illustrating an example of communication between electronic devices of FIG. 1 or 2, the AID values in a trigger frame may identify the associated stations that are allowed to transmit in the allocated reservation unit(s). Note that the AID value of the triggered station and the transmitter address (TA) in the trigger frame may identify the transmitter and responder.

In order to improve station privacy, a station that responds to a trigger frame may include MAC addresses normally. Alternatively, the station may overwrite the transmitter address field of the MAC headers of the high-efficiency trigger-based PPDUs. Note that both MAC addresses may be overwritten or only the station MAC address may be overwritten. The overwrite may use, e.g., a value '0' or a value that is easy to recognize by the triggering device that is specified in an IEEE 802.11bi specification. In some embodiments, the station may not include MAC address fields in the MAC Headers of the MPDUs transmitted in the high-efficiency trigger-based PPDU, which may reduce transmission overheads.

For example, a trigger frame from an access point may include the access-point MAC address, the AID(s) of station(s) and one or more reservation units for each triggered station. A triggered station may not transmit MAC headers of MPDUs of the high-efficiency trigger-based PPDUs. The access point may send the multi-station block acknowledgment to a broadcast address. The transmitter address may identify the access point and the AID may identify the station that gets or receives the block acknowledgment bitmap. Note that an obfuscated AID value may be used in the trigger frame and the multi-station block acknowledgment. Moreover, an access-point block acknowledgment may include the access-point MAC address, a broadcast MAC address and the AID(s) of station(s).

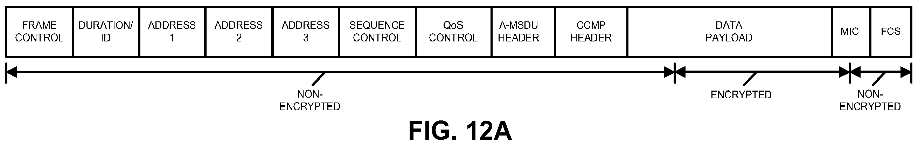

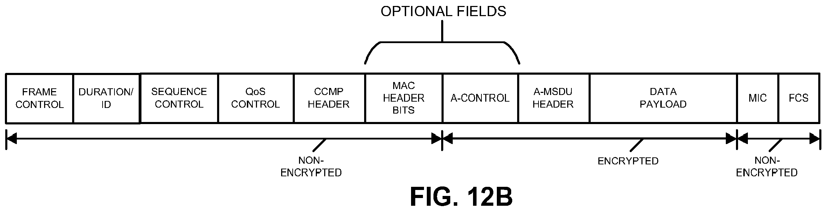

FIGs. 12A and 12B present drawings of examples of a data frame in infrastructure mode and a privacy-enhanced data frame during communication between electronic devices in FIG. 1 or 2. In a privacy-enhanced data frame, the MPDU header may exclude address fields (e.g., which may include 6 octets) and may include encrypted main content. Notably, the address 1, 2 and 3 fields may be present in the infrastructure mode. The transmitter may encrypt the data frame in a similar manner as when the MAC headers are present. Moreover, the transmitter may apply an MLD MAC address in the frame encryption, e.g., as specified in the IEEE 802.11be specification. Furthermore, the receiver may determine the transmitter address and the receiver address (RA) of a received MU PPDU by using a BSS color field and the AID.

Note that a triggered station may assume that the triggered station has applied the transmitter address and the receiver address in the triggered PPDU. Notably, the receiver may decrypt the frame by assuming that frame contains a full set of addresses. The transmitter address and the receiver address of the MAC headers may be set to determined addresses or the MLD address as described in IEEE 802.11be.

Moreover, the transmitter may include encrypted A-MAC service data unit (MSDU) headers in a frame payload. The A-MSDU headers may include the source address (SA) and destination address (DA) fields. The source address and the destination address may be needed for final destination detection and in order to be able to respond to the source of the frame. Note that the encrypted A-MSDU header may be transmitted in the payload.

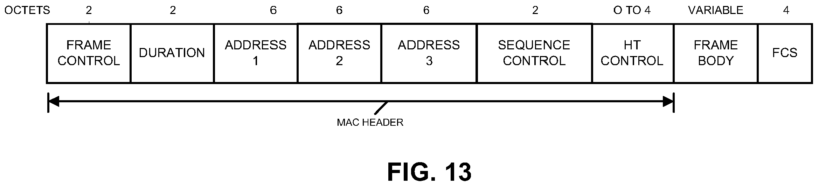

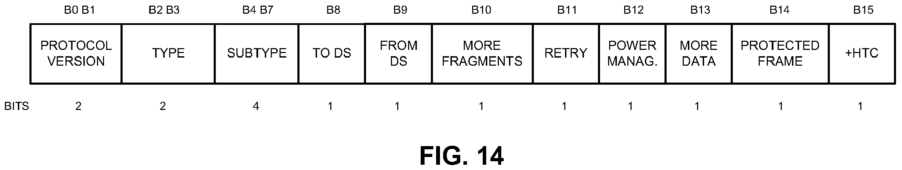

FIG. 13 presents a drawing of an example of a management-frame format. Moreover, FIG. 14 presents a drawing of an example of a frame control field format in a S1G PPDU when a type subfield is equal to '0' or '2.' Furthermore, Table 5 presents examples of new PPDU types. Notably, there may be new PPDU types without address fields, including a QoS data frame without addresses, a QoS null frame without addresses, a management frame without address, and a block acknowledgment without addresses. The PPDU types that may carry these MPDUs may include a high-efficiency trigger-based PPDU and/or a MU PPDU.

Table 5.

| Proposed Frame Types | PPDU Types That Carry the MPDU | Example Type Field Value | Example Subtype Field Value |
|---|---|---|---|
| QoS Data, No Addresses | High Efficiency Trigger-Based PPDU, Multi-User PPDU | 10 | 1101 |
| QoS Null, No Addresses | | | 0111 |
| Management, No Addresses | | 00 | 1111 |
| Block Acknowledgment, No Addresses | | 01 | 1111 |

The type and subtype subfield of the frame control subfield of the MAC header field may identify whether the MPDU includes the address fields. The data type ' 10' may have only one data subtype value currently available, so the QoS null may use subtype '1101' and may include the encrypted A-control field in the payload. Otherwise, a currently reserved subtype value may be the identifier. Moreover, the receiver may use the type field and subtype field values to determine whether the MAC headers contain address fields. For example, the data type of ' 10' with the subtype '0111' may specify the QoS null frame with no addresses, the data type of '00' with the subtype of '1111' may specify the management frame with no addresses, and the data type of '01' with the subtype of '1111' may specify the block acknowledgment with no addresses.

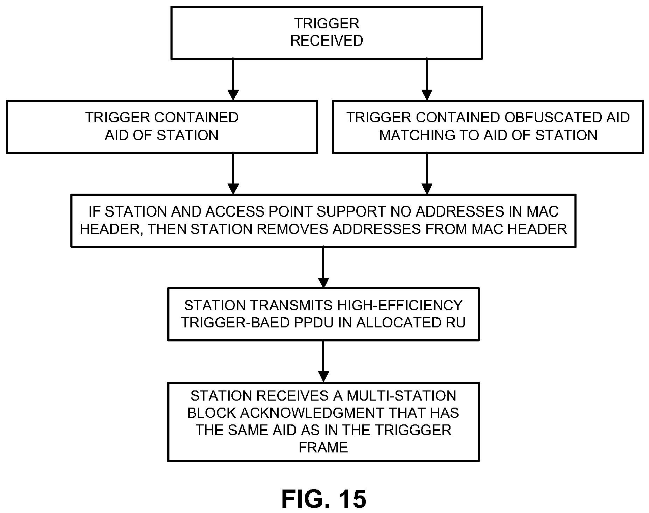

FIG. 15 presents a flow diagram of a method for operating a station when a trigger frame is received. Furthermore, Table 6 presents examples of trigger-frame variants. Notably, when using frames without addresses with different trigger variants, the buffer status report poll trigger may solicit a QoS null frame with a buffer status report (BSR) A-control field. The QoS null frame without address fields may carry the buffer status report for an access point and a triggered station. Alternatively, the QoS null frame address fields may be punctured, e.g., set to zero or a special value. Note that multi-user block acknowledgment request (BAR) trigger frame may solicit a block acknowledgment. The block acknowledgment frame may not contain addresses. Alternatively, the block acknowledgment frame address files may be punctured, e.g., set to zero or a special value. A multi-station block acknowledgment may be used because it includes the AID. Furthermore, a trigger frame may result in a QoS data frame, a QoS null frame or a management frame that are included in a high-efficiency PPDU and that do not include address fields.

Table 6.

| Trigger-Frame Variant | Response |
|---|---|
| Buffer Status Report Poll (BSRP) | QoS Null Frame Without Address Fields Carries Buffer Status Report A-Control Field |
| Multi-User-BAR | Block Acknowledgment Frame Without Address Fields Carries Block Acknowledgment Frame. Multi-Station Block Acknowledgment Variant Includes AID |
| Basic Trigger | The QoS Data, QoS Null and Management Frames That Are Included to the High-Efficiency PPDU May Not Have Address Fields |

For example, when a trigger frame is received by a station, the trigger frame may include the station AID or may include an obfuscated AID that matches the AID corresponding to the station. If the station and the access point support no addresses in the MAC header, then the station may remove MAC addresses from the MAC header. Then, the station may transmit a high-efficiency trigger-based PPDU in the allocated reservation unit(s). Next, the station may receive a multi-station block acknowledgment that includes the same AID as the trigger frame.

In some embodiments, downlink MU PPDU transmission may not use address fields. Notably, Table 7 presents examples of MU PPDU and multi-station block acknowledgment solicited with triggered response scheduling (TRS), and - presents a drawing of an example of a multi-station block acknowledgment frame format. For example, the AID values in the MU-PPDU fame may identify the stations that have allocated reservation units. The AID value may be obfuscated if a station and the access point are capable of using obfuscated AID values. Moreover, the access point may include its MAC address in the MPDUs, but may remove or set the station MAC address to, e.g., zero. The access point may use a TRS A-control field in MAC headers of a MPDU to allocate reservation unit(s) for a block acknowledgment transmission. In order to hide MAC addresses, a station may respond with a multi-station block acknowledgment without address fields (such as the receiver address and the transmitter address) in the reservation units allocated by the triggered response scheduling A-control field. Alternatively, the station may overwrite the address fields in the block acknowledgment frame. Note that the AID field in the multi-station block acknowledgment may indicate the transmitter (or station) of the block acknowledgment frame.

Table 7.

| Legacy Preamble | Extremely High Throughput/High Efficiency Preamble: RU 1 AID 1, RU2 AID 2, RU 3 AID 3, RU 4 AID 4 | RU1 | Multi-Station Block Acknowledgment 1 |
| | | RU 2 | Multi-Station Block Acknowledgment 2 |
| | | RU 3 | Multi-Station Block Acknowledgment 3 |
| | | RU 4 | Multi-Station Block Acknowledgment 4 |

In a downlink MU PPDU, if the MPDUs in a reservation unit (such as in a channel in a band of frequencies) does not contain MAC addresses (e.g., for reservation unit 1), the station may decrypt at least one MPDU before it sends a block acknowledgment to ensure that the station is the receiver. Alternatively, if the MPDUs in a reservation unit contain MAC addresses (e.g., for reservation unit 4), the station can ensure that it is the receiver of the frame by checking the MAC addresses.

In some embodiments, the MU PPDU preamble may include a BSS color value (e.g., between 0 and 63). Each access point may try to select unique BSS color values, but the BSS color values may collide. The transmitter and receiver detection of an MU PPDU may be based at least in part on the BSS color and AID values. Moreover, the MAC headers of the MPDUs may be used by the receiver to detect whether it should receive the frame. If the MPDU MAC Headers do not contain addresses, the station may receive the frames with matching AID and BSS color value and may stop receiving the reservation unit(s) if a received MPDU fails decryption. Furthermore, if an access point detects a BSS color collision, the access point may signal a BSS color collision, e.g., that multiple access points may be using the same BSS color value. This signals to the stations that BSS color values may collide. Additionally, the access point may transmit clear-to-send (CTS)-to-self or a multi-user request-to-send (RTS)/CTS frames to signal that the access point is the transmitter. If the associated access point is not the transmitter of the CTS frame, the station may immediately stop a transmit opportunity (TXOP) reception.

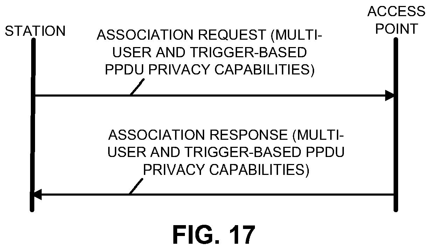

Table 8 presents an example of MU and trigger-based PPDU privacy capabilities field, and FIG. 17 presents a drawing of communication between electronic devices of FIG. 1 or 2. Notably, Table 8 and FIG. 17 show capability signaling in multi-user and triggered PPDUs, such as in a multi-user and trigger-based PPDU privacy and capabilities field. The multi-user and trigger-based PPDU privacy and capabilities field of a station may be communicated from a station to an access point in an association request frame, and the multi-user and trigger-based PPDU privacy and capabilities field of an access point may be communicated from the access point to the station in the association response frame. Thus, association signaling may be used to signal access-point and station capabilities for AID obfuscation and no MAC addresses. Note that the capabilities may be signaled at the MLD level, e.g., all the links may have the same capability value.

Table 8.

| | Support of No Addresses in High Efficiency Trigger-Based PPDU | Support of No Addresses in Multi-User PPDU Transmit | Support of No Addresses in Multi-User PPDU Receive | Support of Obfuscated AID | Reserved |
|---|---|---|---|---|---|
| Bits | 1 | 1 | 1 | 1 | 4 |

Moreover, the support of no addresses in a high-efficiency trigger-based PPDU field may be set to '1' if the station supports no addresses in the high-efficiency trigger-based PPDU and may be set to '0' otherwise. When transmitted by a non-access point MLD, this field may indicate that stations in all links are capable of sending high-efficiency trigger-based PPDUs that include MPDUs without address fields. Furthermore, when transmitted by an access point MI,D, the field may indicate that access points in all links are capable of receiving high-efficiency trigger-based PPDUs that include MPDUs without address fields.

Note that the support of no addresses in a MLJ PPDU transmitter (TX) field may be set to '1' if the station supports transmission of MU PPDUs that include MPDUs without address fields and may be set to '0' otherwise. Additionally, the support of no addresses in MU PPDU receiver (RX) field may be set to '1' if the station supports reception of MU PPDUs that include MPDUs without address fields and may be set to '0' otherwise. The support of obfuscated AID field may be set to ' 1' if the station supports transmission and reception of obfuscated AID values.

In summary, the disclosed communication techniques define AID field use in address change. Notably, the AID may be changed and/or obfuscated. This may improve privacy of the MU PPDU and triggered PPDU transmissions. Moreover, the disclosed communication techniques provide a mechanism for removing the MAC addresses from the MU PPDU and triggered PPDUs. For example, only the transmitter address and AID may be visible to eavesdroppers in a trigger frame. Additionally, BSS color and AID may be visible in the MU PPDU. The receiver may decrypt the PPDU to ensure that it is the correct receiver before acknowledging receipt of the frame.

Note that the formats of packets or frames communicated during the communication techniques may include more or fewer bits, subfields or fields. Alternatively or additionally, the position of information in these packets or frames may be changed. Thus, the order of the subfields or fields may be changed.

While the preceding embodiments illustrate embodiments of the communication techniques using frequency sub-bands, in other embodiments the communication techniques may involve the concurrent use of different temporal slots, and/or or a combination of different frequency sub-bands, different frequency bands and/or different temporal slots. In some embodiments, the communication techniques may use OFDMA.

Moreover, while the preceding embodiments illustrated the use of Wi-Fi during the communication techniques, in other embodiments of the communication techniques Bluetooth or Bluetooth Low Energy is used to communicate at least a portion of the information in the communication techniques. Furthermore, the information communicated in the communication techniques may be communicated may occur in one or more frequency bands, including: 900 MHz, a 2.4 GHz frequency band, a 5 GHz frequency band, a 6 GHz frequency band, a 60 GHz frequency band, a Citizens Broadband Radio Service (CBRS) frequency band, a band of frequencies used by LTE or another data communication protocol, etc.

As described herein, aspects of the present technology may include the gathering and use of data available from various sources, e.g., to improve or enhance functionality. The present disclosure contemplates that in some instances, this gathered data may include personal information data that uniquely identifies or can be used to contact or locate a specific person. Such personal information data can include demographic data, location-based data, telephone numbers, email addresses, Twitter ID's, home addresses, data or records relating to a user's health or level of fitness (e.g., vital signs measurements, medication information, exercise information), date of birth, or any other identifying or personal information. The present disclosure recognizes that the use of such personal information data, in the present technology, may be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should only occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology may be configurable to allow users to selectively "opt in" or "opt out" of participation in the collection of personal information data, e.g., during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure may broadly cover use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

We now describe embodiments of an electronic device. FIG. 18 presents a block diagram of an electronic device 1800 (which may be a cellular telephone, a smartwatch, an access point, a wireless speaker, an IoT device, another electronic device, etc.) in accordance with some embodiments. This electronic device includes processing subsystem 1810, memory subsystem 1812 and networking subsystem 1814. Processing subsystem 1810 includes one or more devices configured to perform computational operations. For example, processing subsystem 1810 can include one or more microprocessors, application-specific integrated circuits (ASICs), microcontrollers, graphics processing units (GPUs), programmable-logic devices, and/or one or more digital signal processors (DSPs).

Memory subsystem 1812 includes one or more devices for storing data and/or instructions for processing subsystem 1810, and/or networking subsystem 1814. For example, memory subsystem 1812 can include dynamic random access memory (DRAM), static random access memory (SRAM), a read-only memory (ROM), flash memory, and/or other types of memory. In some embodiments, instructions for processing subsystem 1810 in memory subsystem 1812 include: program instructions or sets of instructions (such as program instructions 1822 or operating system 1824), which may be executed by processing subsystem 1810. For example, a ROM can store programs, utilities or processes to be executed in a nonvolatile manner, and DRAM can provide volatile data storage, and may store instructions related to the operation of electronic device 1800. Note that the one or more computer programs may constitute a computer-program mechanism, a computer-readable storage medium or software. Moreover, instructions in the various modules in memory subsystem 1812 may be implemented in: a high-level procedural language, an object-oriented programming language, and/or in an assembly or machine language. Furthermore, the programming language may be compiled or interpreted, e.g., configurable or configured (which may be used interchangeably in this discussion), to be executed by processing subsystem 1810. In some embodiments, the one or more computer programs are distributed over a network-coupled computer system so that the one or more computer programs are stored and executed in a distributed manner.

In addition, memory subsystem 1812 can include mechanisms for controlling access to the memory. In some embodiments, memory subsystem 1812 includes a memory hierarchy that comprises one or more caches coupled to a memory in electronic device 1800. In some of these embodiments, one or more of the caches is located in processing subsystem 1810.

In some embodiments, memory subsystem 1812 is coupled to one or more high-capacity mass-storage devices (not shown). For example, memory subsystem 1812 can be coupled to a magnetic or optical drive, a solid-state drive, or another type of mass-storage device. In these embodiments, memory subsystem 1812 can be used by electronic device 1800 as fast-access storage for often-used data, while the mass-storage device is used to store less frequently used data.

Networking subsystem 1814 includes one or more devices configured to couple to and communicate on a wired and/or wireless network (i.e., to perform network operations), such as: control logic 1816, one or more interface circuits (or interface circuitry) 1818 and a set of antennas 1820 (or antenna elements) in an adaptive array that can be selectively turned on and/or off by control logic 1816 to create a variety of optional antenna patterns or 'beam patterns.' Alternatively, instead of the set of antennas, in some embodiments electronic device 1800 includes one or more nodes 1808, e.g., a pad or a connector, which can be coupled to the set of antennas 1820. Thus, electronic device 1800 may or may not include the set of antennas 1820. For example, networking subsystem 1814 can include a Bluetooth™ networking system, a cellular networking system (e.g., a 3G/4G/5G network such as UMTS, LTE, etc.), a universal serial bus (USB) networking system, a networking system based on the standards described in IEEE 802.12 (e.g., a Wi-Fi® networking system), an Ethernet networking system, and/or another networking system.

In some embodiments, networking subsystem 1814 includes one or more radios, such as a wake-up radio that is used to receive wake-up frames and wake-up beacons, and a main radio that is used to transmit and/or receive frames or packets during a normal operation mode. The wake-up radio and the main radio may be implemented separately (such as using discrete components or separate integrated circuits) or in a common integrated circuit.

Networking subsystem 1814 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a 'network interface' for the network system. Moreover, in some embodiments a 'network' or a 'connection' between the electronic devices does not yet exist. Therefore, electronic device 1800 may use the mechanisms in networking subsystem 1814 for performing simple wireless communication between the electronic devices, e.g., transmitting advertising or frame frames and/or scanning for advertising frames transmitted by other electronic devices.

Within electronic device 1800, processing subsystem 1810, memory subsystem 1812 and networking subsystem 1814 are coupled together using bus 1828 that facilitates data transfer between these components. Bus 1828 may include an electrical, optical, and/or electro-optical connection that the subsystems can use to communicate commands and data among one another. Although only one bus 1828 is shown for clarity, different embodiments can include a different number or configuration of electrical, optical, and/or electro-optical connections among the subsystems.

In some embodiments, electronic device 1800 includes a display subsystem 1826 for displaying information on a display, which may include a display driver and the display, such as a liquid-crystal display, a multi-touch touchscreen, etc. Display subsystem 1826 may be controlled by processing subsystem 1810 to display information to a user (e.g., information relating to incoming, outgoing, or an active communication session).

Moreover, electronic device 1800 can also include a user-input subsystem 1830 that allows a user of the electronic device 1800 to interact with electronic device 1800. For example, user-input subsystem 1830 can take a variety of forms, such as: a button, keypad, dial, touch screen, audio input interface, visual/image capture input interface, input in the form of sensor data, etc.

Electronic device 1800 can be (or can be included in) any electronic device with at least one network interface. For example, electronic device 1800 may include: a cellular telephone or a smartphone, a tablet computer, a laptop computer, a notebook computer, a personal or desktop computer, a netbook computer, a media player device, a wireless speaker, an IoT device, an electronic book device, a MiFi® device, a smartwatch, a wearable computing device, a portable computing device, a consumer-electronic device, a vehicle, a door, a window, a portal, an access point, a router, a switch, communication equipment, test equipment, as well as any other type of electronic computing device having wireless communication capability that can include communication via one or more wireless communication protocols.

Although specific components are used to describe electronic device 1800, in alternative embodiments, different components and/or subsystems may be present in electronic device 1800. For example, electronic device 1800 may include one or more additional processing subsystems, memory subsystems, networking subsystems, and/or display subsystems. Additionally, one or more of the subsystems may not be present in electronic device 1800. Moreover, in some embodiments, electronic device 1800 may include one or more additional subsystems that are not shown in FIG. 18. In some embodiments, electronic device may include an analysis subsystem that performs at least some of the operations in the communication techniques. Also, although separate subsystems are shown in FIG. 18, in some embodiments some or all of a given subsystem or component can be integrated into one or more of the other subsystems or component(s) in electronic device 1800. For example, in some embodiments program instructions 1822 are included in operating system 1824 and/or control logic 1816 is included in the one or more interface circuits 1818.

Moreover, the circuits and components in electronic device 1800 may be implemented using any combination of analog and/or digital circuitry, including: bipolar, PMOS and/or NMOS gates or transistors. Furthermore, signals in these embodiments may include digital signals that have approximately discrete values and/or analog signals that have continuous values. Additionally, components and circuits may be single-ended or differential, and power supplies may be unipolar or bipolar.

An integrated circuit may implement some or all of the functionality of networking subsystem 1814. This integrated circuit may include hardware and/or software mechanisms that are used for transmitting wireless signals from electronic device 1800 and receiving signals at electronic device 1800 from other electronic devices. Aside from the mechanisms herein described, radios are generally known in the art and hence are not described in detail. In general, networking subsystem 1814 and/or the integrated circuit can include any number of radios. Note that the radios in multiple-radio embodiments function in a similar way to the described single-radio embodiments.

In some embodiments, networking subsystem 1814 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein comprises receiving signals from other electronic devices and possibly performing one or more processing operations on the received signals).

In some embodiments, an output of a process for designing the integrated circuit, or a portion of the integrated circuit, which includes one or more of the circuits described herein may be a computer-readable medium such as, for example, a magnetic tape or an optical or magnetic disk. The computer-readable medium may be encoded with data structures or other information describing circuitry that may be physically instantiated as the integrated circuit or the portion of the integrated circuit. Although various formats may be used for such encoding, these data structures are commonly written in: Caltech Intermediate Format (CIF), Calma GDS II Stream Format (GDSII), Electronic Design Interchange Format (EDIF), OpenAccess (OA), or Open Artwork System Interchange Standard (OASIS). Those of skill in the art of integrated circuit design can develop such data structures from schematic diagrams of the type detailed above and the corresponding descriptions and encode the data structures on the computer-readable medium. Those of skill in the art of integrated circuit fabrication can use such encoded data to fabricate integrated circuits that include one or more of the circuits described herein.

While the preceding discussion used a Wi-Fi communication protocol as an illustrative example, in other embodiments a wide variety of communication protocols and, more generally, wireless communication techniques may be used. Thus, the communication techniques may be used in a variety of network interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both. For example, at least some of the operations in the communication techniques may be implemented using program instructions 1822, operating system 1824 (such as a driver for an interface circuit in networking subsystem 1814) or in firmware in an interface circuit networking subsystem 1814. Alternatively or additionally, at least some of the operations in the communication techniques may be implemented in a physical layer, such as hardware in an interface circuit or interface circuitry in networking subsystem 1814. In some embodiments, the communication techniques are implemented, at least in part, in a MAC layer and/or in a physical layer in an interface circuit in networking subsystem 1814.

Note that the use of the phrases 'capable of,' 'capable to,' 'operable to,' or 'configured to' in one or more embodiments, refers to some apparatus, logic, hardware, and/or element designed in such a way to enable use of the apparatus, logic, hardware, and/or element in a specified manner.

While examples of numerical values are provided in the preceding discussion, in other embodiments different numerical values are used. Consequently, the numerical values provided are not intended to be limiting.

Moreover, while the preceding embodiments illustrated the use of wireless signals in one or more bands of frequencies, in other embodiments of the communication techniques electromagnetic signals in one or more different frequency bands are used. For example, these signals may be communicated in one or more bands of frequencies, including: a microwave frequency band, a radar frequency band, 900 MHz, 2.4 GHz, 5 GHz, 6 GHz, 60 GHz, and/or a band of frequencies used by a Citizens Broadband Radio Service or by LTE.

In the preceding description, we refer to 'some embodiments.' Note that 'some embodiments' describes a subset of all of the possible embodiments, but does not always specify the same subset of embodiments.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Accordingly, many modifications and variations will be apparent to practitioners skilled in the art, and the general principles defined herein may be applied to other embodiments and applications without departing from the spirit and scope of the present disclosure. Additionally, the discussion of the preceding embodiments is not intended to limit the present disclosure. Thus, the present disclosure is not intended to be limited to the embodiments shown, but is to be accorded the widest scope consistent with the principles and features disclosed herein.

**Claims**

1.   An electronic device, comprising:

an antenna node configured to communicatively couple to an antenna; and
interface circuitry communicatively coupled to the antenna node, wherein the interface circuitry is configured to:

associate with a second electronic device in a wireless local area network, WLAN, wherein, while associating with the second electronic device, the interface circuitry is configured to receive, from the second electronic device, an association identifier, AID, corresponding to the electronic device for use when communicating frames in the WLAN; and
while associated with the second electronic device, obtain a second AID corresponding to the electronic device for use when communicating second frames in the WLAN, wherein the associating comprises replacing the AID with the second AID.

2.   The electronic device of claim 1, wherein the second electronic device comprises an access point.

3.   The electronic device of claim 1 or claim 2, wherein, while associating with the second electronic device, the predefined set of AIDs is received from the second electronic device.

4. The electronic device of any of claims 1 to 3, wherein the interface circuitry is configured to obfuscate a current AID used by the electronic device when communicating the frames or the second frames; and
wherein the current AID comprises the AID or the second AID.

5. The electronic device of claim 4, wherein the obfuscation is performed by adding a value associated with the second electronic device to the current AID; and
wherein the value is changed in accordance with a second time interval.

6. The electronic device of claim 5, wherein the second time interval comprises a beacon interval of the second electronic device.

7. The electronic device of claim 4, wherein the frames or the second frames indicate that the current AID is obfuscated.

8. The electronic device of any of claims 4 to 7, wherein the electronic device comprises a non-access point multi-link device, MLD, and the current AID is used for multiple links in the WLAN; and
wherein the obfuscating is MLD-specific.

9. The electronic device of any of claims 4 to 8, wherein the current AID is used for only one link in the WLAN.

10. The electronic device of any preceding claim, wherein obtaining the second AID comprises: selecting the second AID from a predefined set of AIDs; or receiving, from the second electronic device, the second AID.

11. A method for obtaining a second association identifier, AID, corresponding to an electronic device, comprising:
by an electronic device:

associating with a second electronic device in a wireless local area network, WLAN, wherein, while associating with the second electronic device, the electronic device receives, from the second electronic device, an AID corresponding to the electronic device for use when communicating frames in the WLAN; and
while associated with the second electronic device, obtaining the second AID corresponding to the electronic device for use when communicating second frames in the WLAN, wherein the associating comprises replacing the AID with the second AID.

12. An electronic device, comprising:

an antenna node configured to communicatively couple to an antenna; and
interface circuitry communicatively coupled to the antenna node, wherein the interface circuitry is configured to:

associate with a second electronic device in a wireless local area network, WLAN, wherein, while associating with the second electronic device, the interface circuitry is configured to provide, addressed to the second electronic device, an association identifier, AID, corresponding to the second electronic device for use when communicating frames in the WLAN; and
while associated with the second electronic device, provide, addressed to the second electronic device, a second AID corresponding to the second electronic device for use when communicating second frames in the WLAN, wherein the associating comprises replacing the AID with the second AID.

13. The electronic device of claim 12, wherein providing the AID comprises providing a predefined set of AIDs.

14. The electronic device of claim 13, wherein adjacent AIDs in the predefined set of AIDs are unique relative to corresponding AIDs in another predefined set of AIDs provided by the electronic device to a third electronic device that is associated with the electronic device.

15. The electronic device of claim 12, wherein the interface circuitry is configured to provide, for the second electronic device, information indicating a value used in obfuscating the AID or the second AID when used to communicate the frames or the second frames, respectively.

ELECTRONIC
DEVICE
110-2

RADIO(S)
114-3

WUR
118-2

ELECTRONIC
DEVICE
110-1

RADIO(S)
114-1

WUR
118-1

WIRELESS
SIGNALS
116

ACCESS
POINT
112

RADIO(S)
114-2

**FIG. 1**

ACCESS POINT
112

ML ENTITY
214

| AP 210-1 (BSSID 212-1) | AP 210-2 (BSSID 212-2) | AP 210-3 (BSSID 212-3) |
|---|---|---|
| MAC LAYER | MAC LAYER | MAC LAYER |
| PHY LAYER | PHY LAYER | PHY LAYER |

LINK 216-1

LINK 216-2

LINK 216-3

| PHY LAYER | PHY LAYER | PHY LAYER |
|---|---|---|
| L-MAC LAYER | L-MAC LAYER | L-MAC LAYER |
| STATION 218-1 (MAC ADD. 222-1) | STATION 218-2 (MAC ADD. 222-2) | STATION 218-3 (MAC ADD. 222-3) |

ML ENTITY
220

ELECTRONIC DEVICE
110-1

**FIG. 2**

◄— 300

```
┌─────────────────────────────────────────────┐
│         ASSOCIATE WITH A                      │
│      SECOND ELECTRONIC DEVICE                 │
│   ┌──────────────────────────┐─312       ─310 │
│   │        RECEIVE           │                │
│   │        AN AID            │                │
│   └──────────────────────────┘                │
└──────────────────│──────────────────────────┘
                   ▼
   ┌──────────────────────────┐─314
   │         OBTAIN           │
   │      A SECOND AID        │
   └──────────────────────────┘
```

# FIG. 3

◄— 400

```
┌─────────────────────────────────────────────┐
│         ASSOCIATE WITH A                      │
│      SECOND ELECTRONIC DEVICE                 │
│   ┌──────────────────────────┐─412       ─410 │
│   │        PROVIDE           │                │
│   │        AN AID            │                │
│   └──────────────────────────┘                │
└──────────────────│──────────────────────────┘
                   ▼
   ┌──────────────────────────┐─414
   │        PROVIDE           │
   │      A SECOND AID        │
   └──────────────────────────┘
```

# FIG. 4

**FIG. 5**

600

```
┌─────────────────────────────────┐
│   PROVIDE A FRAME WITHOUT A MAC  │─610
│  ADDRESS OF AN ELECTRONIC DEVICE │
└─────────────────────────────────┘
                 │
                 ▼
┌─────────────────────────────────┐
│      PERFORM ONE OR MORE         │─612
│      ADDITIONAL OPERATIONS       │
└─────────────────────────────────┘
```

**FIG. 6**

700

```
┌─────────────────────────────────┐
│   PROVIDE A FRAME WITHOUT A MAC  │─710
│  ADDRESS OF A SECOND ELECTRONIC  │
│             DEVICE               │
└─────────────────────────────────┘
                 │
                 ▼
┌─────────────────────────────────┐
│      PERFORM ONE OR MORE         │─712
│      ADDITIONAL OPERATIONS       │
└─────────────────────────────────┘
```

**FIG. 7**

ELECTRONIC
DEVICE
110-1

IC(s)
810

ACCESS POINT
112

IC(s)
814

ASSOC.
812

FRAME
816

**FIG. 8**

ADDRESS AND AID CHANGE UPLINK AND
DOWNLINK SERIAL NUMBER (SN), PACKET
NUMBER (PN) AND TRAFFIC IDENTIFIER
(TID) OFFSET CHANGED ONCE IN ~10 MIN =
DEFINES THE AID OF THE STATION

CHANGE BSS-SPECIFIC AID OFFSET
EVERY BEACON INTERVAL (E.G., 1000 ms)
= OFFSET TO OBFUSCATE THE AID

CURRENT AID

# FIG. 9

SET TO 1 IF
AID IS
OBFUSCATED

| E | R | | | | | | | | | | |
|---|---|---|---|---|---|---|---|---|---|---|---|

EXTRA BIT
PRESENT IN
TRIGGER

10 BITS ASSIGNED BY THE
ACCESS POINT

**FIG. 10**

STATION

RU 4

RU 3

RU 2

RU 1

ACCESS
POINT

TRIGGER RU
ALLOCATION:
RU 1: AID 1
RU 2: AID 1
RU 3: AID 2
RU 4: AID 3

BLOCK
ACKNOWLEDGMENT
MULTI-STATION
(ADDRESS 1,
ADDRESS 2,
ADDRESS 3)

**FIG. 11**

| FRAME CONTROL | DURATION/ ID | ADDRESS 1 | ADDRESS 2 | ADDRESS 3 | SEQUENCE CONTROL | QoS CONTROL | A-MSDU HEADER | CCMP HEADER | DATA PAYLOAD | MIC | FCS |
|---|---|---|---|---|---|---|---|---|---|---|---|

NON-ENCRYPTED

ENCRYPTED

NON-ENCRYPTED

**FIG. 12A**

EP 4 290 902 A1

OPTIONAL FIELDS

| FRAME CONTROL | DURATION/ ID | SEQUENCE CONTROL | QoS CONTROL | CCMP HEADER | MAC HEADER BITS | A-CONTROL | A-MSDU HEADER | DATA PAYLOAD | MIC | FCS |
|---|---|---|---|---|---|---|---|---|---|---|

NON-ENCRYPTED

ENCRYPTED

NON-ENCRYPTED

## FIG. 12B

| OCTETS | 2 | 2 | 6 | 6 | 6 | 2 | O TO 4 | VARIABLE | 4 |
|---|---|---|---|---|---|---|---|---|---|
| | FRAME CONTROL | DURATION | ADDRESS 1 | ADDRESS 2 | ADDRESS 3 | SEQUENCE CONTROL | HT CONTROL | FRAME BODY | FCS |

MAC HEADER

**FIG. 13**

| B0 B1 | B2 B3 | B4 B7 | B8 | B9 | B10 | B11 | B12 | B13 | B14 | B15 |
|---|---|---|---|---|---|---|---|---|---|---|
| PROTOCOL VERSION | TYPE | SUBTYPE | TO DS | FROM DS | MORE FRAGMENTS | RETRY | POWER MANAG. | MORE DATA | PROTECTED FRAME | +HTC |

BITS    2    2    4    1    1    1    1    1    1    1    1

**FIG. 14**

```
          ┌─────────────────────────────┐
          │          TRIGGER            │
          │          RECEIVED           │
          └─────────────────────────────┘
              │                     │
              ▼                     ▼
┌──────────────────────┐  ┌──────────────────────────────┐
│   TRIGGER CONTAINED   │  │  TRIGGER CONTAINED OBFUSCATED AID  │
│   AID OF STATION      │  │    MATCHING TO AID OF STATION  │
└──────────────────────┘  └──────────────────────────────┘
              │                     │
              ▼                     ▼
┌──────────────────────────────────────────────────────────┐
│  IF STATION AND ACCESS POINT SUPPORT NO ADDRESSES IN MAC  │
│  HEADER, THEN STATION REMOVES ADDRESSES FROM MAC HEADER   │
└──────────────────────────────────────────────────────────┘
                            │
                            ▼
        ┌──────────────────────────────────────┐
        │   STATION TRANSMITS HIGH-EFFICIENCY   │
        │  TRIGGER-BAED PPDU IN ALLOCATED RU    │
        └──────────────────────────────────────┘
                            │
                            ▼
        ┌──────────────────────────────────────┐
        │   STATION RECEIVES A MULTI-STATION    │
        │  BLOCK ACKNOWLEDGMENT THAT HAS        │
        │  THE SAME AID AS IN THE TRIGGGER      │
        │              FRAME                    │
        └──────────────────────────────────────┘
```

## FIG. 15

REPEAT FOR EACH <AID, TID> TUPLE

| PER AID TRAFFIC IDENTIFIER (TID) INFO. |
|---|

OCTETS                              VARIABLE

| AID TRAFFIC IDENTIFIER INFO. | BLOCK ACKNOWLEDGMENT STARTING SEQUENCE CONTROL | BLOCK ACKNOWLEDGMENT BITMAP |
|---|---|---|

OCTETS        2                    0 OR 2              0, 4, 8, 16 OR 32

B0    B10            B11            B12    B15

| AID 11 | ACKNOWLEDGMENT TYPE | TRAFFIC IDENTIFIER |
|---|---|---|

BITS      11                 1                4

# FIG. 16

ACCESS
POINT

STATION ASSOCIATION REQUEST (MULTI-
USER AND TRIGGER-BASED
PPDU PRIVACY CAPABILITIES)

ASSOCIATION RESPONSE (MULTI-
USER AND TRIGGER-BASED PPDU
PRIVACY CAPABILITIES)

**FIG. 17**

← 1800

MEMORY SUBSYSTEM
1812

OPERATING
SYSTEM
1824

PROGRAM
INSTRUCTIONS
1822

NETWORKING SUBSYSTEM
1814

SET OF
ANTENNAS
1820

CONTROL
LOGIC
1816

INTERFACE
CIRCUIT(S)
1818

BUS
1828

NODES
1808

USER-INPUT
SUBSYSTEM
1830

PROCESSING
SUBSYSTEM
1810

DISPLAY
SUBSYSTEM
1826

**FIG. 18**

Europäisches
Patentamt

European
Patent Office

Office européen
des brevets

# EUROPEAN SEARCH REPORT

**Application Number**

EP 23 17 7319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/367872 A1 (HUANG PO-KAI [US] ET AL) 25 November 2021 (2021-11-25) * paragraph [0015] – paragraph [0115] * * figures 1-7 * | 1-15 | INV. H04W12/02 H04W12/75 ADD. H04W84/12 |
| X | US 2021/014679 A1 (LIU YONG [US] ET AL) 14 January 2021 (2021-01-14) * paragraph [0021] – paragraph [0109] * * figures 1-8 * | 1-15 | |
| X | US 2017/012977 A1 (LI XIAOXIAN [CN] ET AL) 12 January 2017 (2017-01-12) * paragraph [0057] – paragraph [0303] * * figures 1-22 * | 1-15 | |
| A | WO 2012/068384 A2 (QUALCOMM INC [US]; WENTINK MAARTEN MENZO [NL]) 24 May 2012 (2012-05-24) * paragraph [0081] – paragraph [0099] * * figure 5 * | 1-15 | |
| A | JARKKO KNECKT (APPLE): "Privacy Requirements", IEEE DRAFT; 11-22-0623-01-00BI-PRIVACY-REQUIREMENTS, IEEE-SA MENTOR, PISCATAWAY, NJ USA , vol. 802.11bi, no. 1 19 April 2022 (2022-04-19), pages 1-24, XP068190146, Retrieved from the Internet: URL:https://mentor.ieee.org/802.11/dcn/22/ 11-22-0623-01-00bi-privacy-requirements.pp tx [retrieved on 2022-04-19] * the whole document * | 1-15 | **TECHNICAL FIELDS SEARCHED (IPC)** H04W H04L |

The present search report has been drawn up for all claims

| Place of search | Date of completion of the search | Examiner |
|---|---|---|
| Munich | 10 October 2023 | Ghomrasseni, Z |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 7319

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2023

| Patent document cited in search report | Publication date | Patent family member(s) | Publication date |
|---|---|---|---|
| US 2021367872 A1 | 25-11-2021 | NONE | |
| US 2021014679 A1 | 14-01-2021 | CN 112291780 A | 29-01-2021 |
| | | US 2021014679 A1 | 14-01-2021 |
| US 2017012977 A1 | 12-01-2017 | CN 104955038 A | 30-09-2015 |
| | | EP 3116252 A1 | 11-01-2017 |
| | | JP 2017515353 A | 08-06-2017 |
| | | KR 20160136419 A | 29-11-2016 |
| | | US 2017012977 A1 | 12-01-2017 |
| | | WO 2015144050 A1 | 01-10-2015 |
| WO 2012068384 A2 | 24-05-2012 | BR 112013012225 A2 | 07-11-2017 |
| | | CA 2816758 A1 | 24-05-2012 |
| | | CA 3023302 A1 | 24-05-2012 |
| | | CN 103222316 A | 24-07-2013 |
| | | EP 2641433 A2 | 25-09-2013 |
| | | ES 2661979 T3 | 04-04-2018 |
| | | HU E036941 T2 | 28-08-2018 |
| | | JP 5752799 B2 | 22-07-2015 |
| | | JP 2013544472 A | 12-12-2013 |
| | | KR 20130087045 A | 05-08-2013 |
| | | RU 2013127249 A | 27-12-2014 |
| | | US 2012300684 A1 | 29-11-2012 |
| | | WO 2012068384 A2 | 24-05-2012 |

EPO FORM P0459

For more details about this annex : see Official Journal of the European Patent Office, No. 12/82